# EUROPEAN PATENT APPLICATION

(11) **EP 4 668 787 A1**
(43) Date of publication of application: **24.12.2025**
(21) Application number: 23921718.5
(22) Date of filing: 14.02.2023
(51) Int. Cl.: H04W 4/02

(54) **INFORMATION ACQUISITION METHOD AND APPARATUS**

(71) Applicant: Beijing Xiaomi Mobile Software Co., Ltd., Beijing 100085 (CN)
(72) Inventor: LIU, Xiaofei, Beijing 100085 (CN)
(74) Representative: Gunzelmann, Rainer
(86) International application number: PCT/CN2023/076025
(87) International publication number: WO 2024/168550

(57) **Abstract**

Disclosed in embodiments of the present disclosure are an information acquisition method and apparatus. The method comprises: a core network device receives first indication information sent by a first node or a second node, wherein the first node is a donor node of the second node, and the first indication information is used for indicating user location information of the second node. Thus, the core network device can determine the user location information of the second node.

## Description

### TECHNICAL FIELD

The disclosure relates to a field of communication technologies, and particularly to a method and an apparatus for obtaining information.

### BACKGROUND

In an integrated access and backhaul (IAB) network architecture, an IAB-node provides radio access and radio backhaul of an access service for a terminal. An IAB-donor provides a radio backhaul function to the IAB-node and provides an interface between the terminal and a core network device. The IAB-node connects to the IAB-donor by a radio backhaul link, thus enabling the terminal served by the IAB-node to connect to the core network device.

In the related art, user location information (ULI) of the IAB-node is not supported to be reported to the core network device. Therefore, determining the ULI of the IAB-node by the core network device is a problem to be solved.

### SUMMARY

Embodiments of the disclosure provide a method and an apparatus for obtaining information, which may be applied to a 5G system and is suitable for a scenario supporting integrated access and backhaul (IAB). A core network device may determine user location information (ULI) of a second node.

In a first aspect, embodiments of the disclosure provide a method for obtaining information, executed by a core network device. The method includes: receiving first indication information sent by a first node or a second node, in which the first node is an IAB-donor of the second node, and the first indication information is used to indicate ULI of the second node.

In a technical solution, the core network device receives the first indication information sent by the first node or the second node, in which the first node is the IAB-donor of the second node, and the first indication information is used to indicate the ULI of the second node. Thus, the core network device may determine the ULI of the second node.

In a second aspect, embodiments of the disclosure provide another method for obtaining information, executed by a first node. The method includes: sending first indication information to a core network device, in which the first node is an IAB-donor of a second node, and the first indication information is used to indicate ULI of the second node.

In a third aspect, embodiments of the disclosure provide another method for obtaining information, executed by a fourth node. The method includes: sending a first message to a first node, in which the first message is used to indicate ULI of a second node, and the first node is an IAB-donor of the second node.

In a fourth aspect, embodiments of the disclosure provide another method for obtaining information, executed by a second node. The method includes: sending first indication information to a core network device, in which the first indication information is used to indicate ULI of the second node.

In a fifth aspect, embodiments of the disclosure provide a communication device. The communication device has some or all of functions of the core network device in the method in above first aspect. For example, functions of the communication device may have functions in some or all of embodiments of the disclosure, or may have functions of realizing any one of embodiments of the disclosure independently. The functions may be realized by hardware, or by hardware executing corresponding software. The hardware or software includes one or more units or modules corresponding to the above functions.

In an implementation, a structure of the communication device may include a transceiver module and a processing module. The processing module is configured to support he communication device to execute corresponding functions in above method. The transceiver module is configured to support communication between the communication device and other devices. The communication device may also include a storage module. The storage module is configured to couple with the transceiver module and the processing module, and the storage module stores a computer program and data necessary for the communication device.

In an implementation, the communication device may include a transceiver module, configured to receive first indication information sent by a first node or a second node, in which the first node is an IAB-donor of the second node, and the first indication information is used to indicate ULI of the second node.

In a sixth aspect, embodiments of the disclosure provide another communication device. The communication device has some or all of functions of the first node in method embodiments in above second aspect. For example, functions of the communication device may have functions in some or all of embodiments of the disclosure, or may have functions of implementing any one of embodiments of the disclosure independently. The functions may be realized by hardware, or by hardware executing corresponding software. The hardware or software includes one or more units or modules corresponding to the above functions.

In an implementation, a structure of the communication device may include a transceiver module and a processing module. The processing module is configured to support the communication device to execute corresponding functions in above method. The transceiver module is configured to support communication between the communication device and other devices. The communication device may also include a storage module. The storage module is configured to couple with the transceiver module and the processing module, and the storage module stores a computer program and data necessary for the communication device.

In an implementation, the communication device may include a transceiver module, configured to send first indication information to a core network device, in which the communication device is an IAB-donor of a second node, and the first indication information is used to indicate ULI of the second node.

In a seventh aspect, embodiments of the disclosure provide another communication device. The communication device has some or all of functions of the fourth node in method embodiments in above third aspect. For example, functions of the communication device may have functions in some or all of embodiments of the disclosure, or may have functions of realizing any one of embodiments of the disclosure independently. The functions may be realized by hardware, or by hardware executing corresponding software. The hardware or software includes one or more units or modules corresponding to the above functions.

In an implementation, a structure of the communication device may include a transceiver module and a processing module. The processing module is configured to support the communication device to execute corresponding functions in above method. The transceiver module is configured to support communication between the communication device and other devices. The communication device may also include a storage module. The storage module is configured to couple with the transceiver module and the processing module, and the storage module stores a computer program and data necessary for the communication device.

In an implementation, the communication device may include a transceiver module, configured to send a first message to a first node, in which the first message is used to indicate ULI of a second node, and the first node is an IAB-donor of the second node.

In an eighth aspect, embodiments of the disclosure provide another communication device. The communication device has some or all of functions of the second node in method embodiments in above fourth aspect. For example, functions of the communication device may have functions in some or all of embodiments of the disclosure, or may have functions of realizing any one of embodiments of the disclosure independently. The functions may be realized by hardware, or by hardware executing corresponding software. The hardware or software includes one or more units or modules corresponding to the above functions.

In an implementation, a structure of the communication device may include a transceiver module and a processing module. The processing module is configured to support the communication device to execute corresponding functions in above method. The transceiver module is configured to support communication between the communication device and other devices. The communication device may also include a storage module. The storage module is configured to couple with the transceiver module and the processing module, and the storage module stores a computer program and data necessary for the communication device.

In an implementation, the communication device may include a transceiver module, configured to send first indication information to a core network device, in which the first indication information is used to indicate ULI of the communication device.

In a ninth aspect, embodiments of the disclosure provide a communication device. The communication device includes a processor. The processor calls a computer program in a memory, to execute the method in the above first aspect.

In a tenth aspect, embodiments of the disclosure provide a communication device. The communication device includes a processor. The processor calls a computer program in a memory, to execute the method in the above second aspect.

In an eleventh aspect, embodiments of the disclosure provide a communication device. The communication device includes a processor. The processor calls a computer program in a memory, to execute the method in the above third aspect.

In a twelfth aspect, embodiments of the disclosure provide a communication device. The communication device includes a processor. The processor calls a computer program in a memory, to execute the method in the above fourth aspect.

In a thirteenth aspect, embodiments of the disclosure provide a communication device. The communication device includes a processor and a memory for storing a computer program. When the computer program stored in the memory is executed by the processor, the communication device is caused to execute the method in the above first aspect.

In a fourteenth aspect, embodiments of the disclosure provide a communication device. The communication device includes a processor and a memory for storing a computer program. When the computer program stored in the memory is executed by the processor, the communication device is caused to execute the method in the above second aspect.

In a fifteenth aspect, embodiments of the disclosure provide a communication device. The communication device includes a processor and a memory for storing a computer program. When the computer program stored in the memory is executed by the processor, the communication device is caused to execute the method in the above third aspect.

In a sixteenth aspect, embodiments of the disclosure provide a communication device. The communication device includes a processor and a memory for storing a computer program. When the computer program stored in the memory is executed by the processor, the communication device is caused to execute the method in the above fourth aspect.

In a seventeenth aspect, embodiments of the disclosure provide a communication device. The communication device includes a processor and an interface circuit. The interface circuit is configured to receive code instructions and transmit the code instructions to the processor. The processor is configured to run the code instructions to cause the communication device to execute the method in the above first aspect.

In an eighteenth aspect, embodiments of the disclosure provide a communication device. The communication device includes a processor and an interface circuit. The interface circuit is configured to receive code instructions and transmit the code instructions to the processor. The processor is configured to run the code instructions to cause the communication device to execute the method in the above second aspect.

In a nineteenth aspect, embodiments of the disclosure provide a communication device. The communication device includes a processor and an interface circuit. The interface circuit is configured to receive code instructions and transmit the code instructions to the processor. The processor is configured to run the code instructions to cause the communication device to execute the method in the above third aspect.

In a twentieth aspect, embodiments of the disclosure provide a communication device. The communication device includes a processor and an interface circuit. The interface circuit is configured to receive code instructions and transmit the code instructions to the processor. The processor is configured to run the code instructions to cause the communication device to execute the method in the above fourth aspect.

In a twenty-first aspect, embodiments of the disclosure provide a system for obtaining information. The system includes the communication device in the fifth aspect, the communication device in the sixth aspect, the communication device in the seventh aspect and/or the communication device in the eighth aspect, or the system includes the communication device in the ninth aspect, the communication device in the tenth aspect, the communication device in the eleventh aspect and/or the communication device in the twelfth aspect, or the system includes the communication device in the thirteenth aspect, the communication device in the fourteenth aspect, the communication device in the fifteenth aspect and/or the communication device in the sixteenth aspect, or the system includes the communication device in the seventeenth aspect, the communication device in the eighteenth aspect, the communication device in the nineteenth aspect and/or the communication device in the twentieth aspect.

In a twenty-second aspect, embodiments of the disclosure provide a computer readable storage medium. The storage medium stores instructions used by the above core network device. When the instructions are executed, the core network device is caused to execute the method in the above first aspect.

In a twenty-third aspect, embodiments of the disclosure provide a readable storage medium. The storage medium stores instructions used by the above first node. When the instructions are executed, the first node is caused to execute the method in the above second aspect.

In a twenty-fourth aspect, embodiments of the disclosure provide a readable storage medium. The storage medium stores instructions used by the above fourth node. When the instructions are executed, the fourth node is caused to execute the method in the above third aspect.

In a twenty-fifth aspect, embodiments of the disclosure provide a readable storage medium. The storage medium stores instructions used by the above second node. When the instructions are executed, the second node is caused to execute the method in the above fourth aspect.

In a twenty-sixth aspect, the disclosure provides a computer program product including a computer program. When the computer program is run on a computer, the computer is caused to execute the method in the above first aspect.

In a twenty-seventh aspect, the disclosure provides a computer program product including a computer program. When the computer program is run on a computer, the computer is caused to execute the method in the above second aspect.

In a twenty-eighth aspect, the disclosure provides a computer program product including a computer program. When the computer program is run on a computer, the computer is caused to execute the method in the above third aspect.

In a twenty-ninth aspect, the disclosure provides a computer program product including a computer program. When the computer program is run on a computer, the computer is caused to execute the method in the above fourth aspect.

In a thirtieth aspect, the disclosure provides a computer program. When the computer program is run on a computer, the computer is caused to execute the method in the above first aspect.

In a thirty-first aspect, the disclosure provides a computer program. When the computer program is run on a computer, the computer is caused to execute the method in the above second aspect.

In a thirty-second aspect, the disclosure provides a computer program. When the computer program is run on a computer, the computer is caused to execute the method in the above third aspect.

In a thirty-third aspect, the disclosure provides a computer program. When the computer program is run on a computer, the computer is caused to execute the method in the above fourth aspect.

### BRIEF DESCRIPTION OF THE DRAWINGS

In order to more clearly illustrate the technical solution in embodiments of the disclosure or the background, description will be made below to accompanying drawings to be used in embodiments of the disclosure or the background.
FIG. 1 is an architectural schematic diagram of a communication system according to an embodiment of the disclosure.
FIG. 2 is a structural schematic diagram of an IAB node according to an embodiment of the disclosure.
FIG. 3 is a schematic diagram of a backhaul link and an access link according to an embodiment of the disclosure.
FIG. 4 is an architectural schematic diagram of an exemplary communication system applicable by an embodiment of the disclosure.
FIG. 5 is an architectural schematic diagram of an exemplary communication system applicable by an embodiment of the disclosure.
FIG. 6 is an architectural schematic diagram of an exemplary communication system applicable by an embodiment of the disclosure.
FIG. 7 is a schematic diagram of an integrated access and backhaul (IAB) architecture according to an embodiment of the disclosure.
FIG. 8 is a schematic diagram of an IAB architecture according to another embodiment of the disclosure.
FIG. 9 is a schematic diagram of IAB-mobile termination (MT) migration according to an embodiment of the disclosure.
FIG. 10 is a schematic diagram of IAB-MT migration according to another embodiment of the disclosure.
FIG. 11 is a flow chart of a method for obtaining information according to an embodiment of the disclosure.
FIG. 12 is a flow chart of a method for obtaining information according to another embodiment of the disclosure.
FIG. 13a is a flow chart of a method for obtaining information according to a still another embodiment of the disclosure.
FIG. 13b is a flow chart of a method for obtaining information according to a still another embodiment of the disclosure.
FIG. 14a is a flow chart of a method for obtaining information according to a still another embodiment of the disclosure.
FIG. 14b is a flow chart of a method for obtaining information according to a still another embodiment of the disclosure.
FIG. 15 is a flow chart of a method for obtaining information according to a still another embodiment of the disclosure.
FIG. 16 is a flow chart of a method for obtaining information according to a still another embodiment of the disclosure.
FIG. 17 is a flow chart of a method for obtaining information according to a still another embodiment of the disclosure.
FIG. 18 is a flow chart of a method for obtaining information according to a still another embodiment of the disclosure.
FIG. 19 is a flow chart of a method for obtaining information according to a still another embodiment of the disclosure.
FIG. 20 is a flow chart of a method for obtaining information according to a still another embodiment of the disclosure.
FIG. 21 is a flow chart of a method for obtaining information according to a still another embodiment of the disclosure.
FIG. 22 is a flow chart of a method for obtaining information according to a still another embodiment of the disclosure.
FIG. 23 is a block diagram of a system for obtaining information according to an embodiment of the disclosure.
FIG. 24 is a block diagram of a system for obtaining information according to another embodiment of the disclosure.
FIG. 25 is a flow chart of a method for obtaining information according t a still o another embodiment of the disclosure.
FIG. 26 is a flow chart of a method for obtaining information according to a still another embodiment of the disclosure.
FIG. 27 is a flow chart of a method for obtaining information according to a still another embodiment of the disclosure.
FIG. 28 is a block diagram of a communication device according to the embodiments of the disclosure.
FIG. 29 is a block diagram of a communication device according to another embodiment of the disclosure.
FIG. 30 is a block diagram of a chip according to an embodiment of the disclosure.

### DETAILED DESCRIPTION

Description will be made in detail below to embodiments of the disclosure. Examples of the embodiments are illustrated in the accompanying drawings, in which, the same or similar numbers represent the same or similar elements or elements with the same or similar functions throughout. Embodiments described below with reference to the accompanying drawings are exemplary, which are intended to explain the disclosure and do not be understood a limitation of the disclosure. In the description of the disclosure, unless otherwise represented, "/" means "or", for example, A/B represents A or B. The term "and/or" in the disclosure merely describes an association relationship of associated objects, representing that there may be three kinds of relationships. For example, A and/or B may represent three cases, that is, A alone, A and B simultaneously, and B alone.

The term employed in the embodiments of the disclosure is merely for the purpose of describing a specific embodiment, and is not intended to limit the embodiments of the disclosure. As used in the embodiments of the disclosure and the appended claims, a singular form "a" or "the" is also intended to include plural forms, unless the context clearly indicates other meaning.

It should be understood that, although terms "first, second, third and so on" may be employed in the embodiments of the disclosure to describe various kinds of information, the information should not be limited to these terms. These terms are merely used to distinguish a same type of information from each other. For example, without departing from a scope of embodiments of the disclosure, first information may also be called second information, and similarly, second information may also be called first information. Depending on the context, the word "if" as used herein may be interpreted as "when" or "in the case that..." or "in response to a determination".

The embodiments of the disclosure are described in detail below. Examples of the embodiments are illustrated in the accompanying drawings, in which the same or similar numbers throughout the embodiments represent the same or similar elements or elements having the same or similar functions. The embodiments below with reference to the accompanying drawings are exemplary and are intended to explain the disclosure, but should not be construed as a limitation to the disclosure.

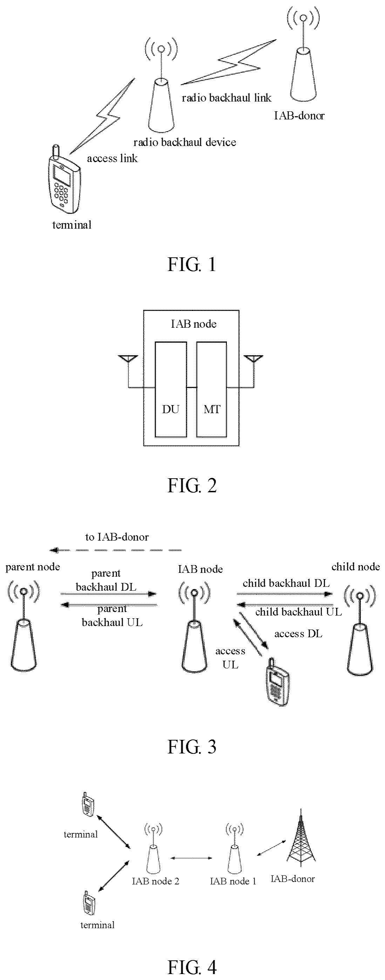

FIG. 1 illustrates an integrated access and backhaul (IAB) system. An IAB-node provides radio access and radio backhaul of an access service for the terminal. An IAB-donor provides a radio backhaul function for the IAB-node and provides an interface of the terminal and the core network device. The IAB-node is connected to the IAB-donor by a radio backhaul link, thus enabling the terminal served by the IAB-node to connect to the core network device.

It needs to be noted that in a network architecture diagram illustrated in FIG. 1, although the terminal, a radio backhaul device and the IAB-donor are illustrated, the network architecture may include but is not limited to the terminal, the radio backhaul device and the IAB-donor. For example, the network architecture may also include a core network or a device used to carry a virtualized network function, etc. In addition, in the system illustrated in FIG. 1, although one terminal, one radio backhaul device and one IAB-donor are illustrated, the network architecture does not limit a number of terminals, radio backhaul devices and IAB-donors. For example, the network architecture may also include multiple terminals, multiple radio backhauls devices and multiple IAB-donors, etc. The radio backhaul device may be the IAB-node.

FIG. 2 illustrates a structural schematic diagram of an IAB-node. The IAB-node in a new radio (NR) may include two parts: a mobile termination (MT) and a distributed unit (DU). The MT may also be understood as a component similar to the terminal in the IAB-node. The DU is relative to a centralized unit (CU) function of the network device. Therefore, it may also be considered that the IAB-node includes an MT function and a DU function. For convenience of description, in a following text, the MT function is referred to as MT or IAB-MT, and the DU function is referred to as DU or IAB-DU. Since the MT has a function similar to a function of a common terminal, it may be understood that the MT is used to a communication between the IAB-node and a parent node. The DU is used to a communication between the IAB-node and a child node. It may be understood that the parent node may be a base station or another IAB-node, and the child node may be a terminal or another IAB-node. A link by which the MT communicates with the parent node is called a parent backhaul link, a link by which the DU communicates with the child IAB-node is called a child backhaul link, and a link by which the DU communicates with a child terminal is called an access link. The IAB-node may be connected to the IAB-donor by multiple levels of parent nodes. In some embodiments, the child backhaul link is also referred to as the access link, in which the parent backhaul link includes a parent backhaul uplink (UL) and a parent backhaul downlink (DL), the child backhaul link includes a child backhaul UL and a child backhaul DL, and the access link includes an access UL and an access DL, as illustrated in FIG. 3.

The method for obtaining information in embodiments of the disclosure may be applied to various communication systems including the radio backhaul device, such as an NR system, an LTE system, an LTE-A system, a worldwide interoperability for microwave access (WiMAX), or a wireless local area network (WLAN), etc.

For example, the communication method in embodiments of the disclosure may be applied to the network architecture in FIG. 1. In the network architecture illustrated in FIG. 1, the terminal is connected to the radio backhaul device in a radio manner, and the radio backhaul device is connected to the IAB-donor in a radio manner. The terminal may communicate with the radio backhaul device and the radio backhaul device may communicate with the IAB-donor by a licensed spectrum or an unlicensed spectrum, or by both the licensed spectrum and the unlicensed spectrum. For example, the licensed spectrum may be a spectrum below 6GHz, which is not limited here. It may be understood that FIG. 1 is only an exemplary description and does not specifically limit the number of terminals and the number of radio backhaul devices in the radio communication system. In the network architecture illustrated in FIG. 1, the radio backhaul device regards a node providing a backhaul service for the radio backhaul device as an only parent node. For example, the radio backhaul device regards the IAB-donor as the parent node. After the radio backhaul device receives a radio bearer for carrying UL information from the terminal and transmits the radio bearer to the IAB-donor, the IAB-donor sends the UL information in the radio bearer to a mobile gateway device (such as, a user plane function (UPF) in the 5G network). The mobile gateway device sends a radio bearer for carrying DL information to the IAB-donor, and then the radio bearer is sent to the terminal by the radio backhaul device.

It may be understood that the IAB-node in the embodiments of the disclosure is merely for a purpose of description and does not mean that the solution of the embodiments of the disclosure is merely applicable to an NR scenario. In the embodiments of the disclosure, the IAB-node may generally refer to any node or device with the radio backhaul function. It may be understood that a use of the IAB-node and a use of a relay node in the disclosure have the same meaning.

As an example, please refer to FIG. 4, which is an example of a communication system including multiple terminals and multiple IAB-nodes. FIG. 4 takes two terminals and two IAB-nodes as an example, where the two terminals are terminal 1 and terminal 2, and these two IAB-nodes are IAB-node 1 and IAB-node 2. The terminal 1 and the terminal 2 may access the IAB-node 2, the IAB-node 2 is connected to the IAB-node 1 in the radio manner, and the IAB-node 1 is connected to the IAB-donor in the radio manner. It may be understood that the IAB-node 1 is a parent node of the IAB-node 2, and the IAB-donor is a parent node of the IAB-node 1. The IAB-node 2 provides a radio access service for the terminal 1 and the terminal 2 by access links (thick lines as illustrated in FIG. 4), and a radio bearer sent by the terminal 1 and a radio bearer sent by the terminal 2 are transmitted to the IAB-donor via the IAB-node 2 and the IAB-node 1 in turn, and then the IAB-donor sends the UL information in the radio bearer to a mobile gateway device. On the contrary, the mobile gateway device may send a radio bearer for carrying the DL information to the IAB-donor, and then send the radio bearer to the terminal 1 and the terminal 2 via the IAB-node 1 and the IAB-node 2 in turn. It may be seen from FIG. 4, the radio bearer sent by any terminal is transmitted via two IAB-nodes in turn to the IAB-donor, which may be understood as a multi-hop radio backhaul scenario, thus ensuring a coverage scope of the network.

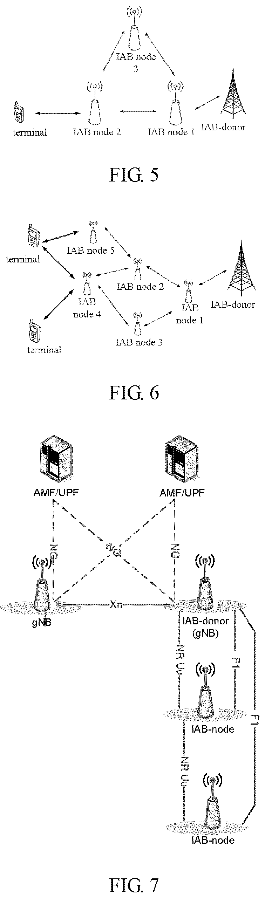

As another example, please refer to FIG. 5, which is an example of a communication system including one terminal and multiple IAB-nodes. FIG. 5 takes one terminal and three IAB-nodes as an example, where the three IAB-nodes are IAB-node 1, IAB-node 2, and IAB-node 3. Compared with FIG. 4, in FIG. 5, the terminal may access the IAB-donor via two paths. One path passes through the terminal, the IAB-node 2, the IAB-node 1, and the IAB-donor in turn; the other path passes through the terminal, the IAB-node 2, the IAB-node 3, the IAB-node 1, and the IAB-donor in turn. The terminal accesses the IAB-donor via multiple paths, which may be understood as a multi-connection radio backhaul scenario, thus ensuring a reliability of service transmission. Then, compared with FIG. 4, the architecture illustrated in FIG. 5 may be understood as a multi-hop plus multi-connection networking scenario.

As another example, please refer to FIG. 6, which is an example of a communication system including multiple terminals and multiple IAB-nodes. FIG. 6 takes two terminals and five IAB-nodes as an example, where the two terminals are terminal 1 and terminal 2, and the five IAB-nodes are IAB-node 1 to IAB-node 5. It may be understood that thick lines in FIG. 6 represent access links, and thin lines represent backhaul links. The terminal 1 may be connected to the IAB-donor via the IAB-node 5, the IAB-node 2, and the IAB-node 1; or may also be connected to the IAB-donor via the IAB-node 4, the IAB-node 2, and the IAB-node 1; or may also be connected to the IAB-donor via the IAB-node 4, the IAB-node 3, and the IAB-node 1. The terminal 2 may be connected to the IAB-donor via the IAB-node 4, the IAB-node 3, and the IAB-node 1; or may also be connected to the IAB-donor via the IAB-node 4, the IAB-node 2, and the IAB-node 1.

It needs to be noted that the network structures illustrated in FIG. 4 to FIG. 6 are only examples and do not limit application scenarios of the disclosure. For example, the disclosure may also be applied to a scenario where the terminal communicates with the IAB-donor via one IAB-node, which is not elaborated one by one.

It may be understood that an F1 interface needs to be established between a DU of the IAB-node and a CU of the IAB-donor, and configuration of routing and bearer mapping needs to be completed, such data transmission between the IAB-node and a target IAB-donor is performed according to the configuration. A name of the interface is not limited in embodiments of the disclosure. The interface being called the F1 interface is taken as an example in the disclosure.

The F1 interface may support a user plane protocol (F1-U) and a control plane protocol (F1-C). The F1-U includes one or more of following protocol layers: a general packet radio service (GPRS) tunneling protocol user plane (GTP-U) protocol layer, a user data gram protocol (UDP) protocol layer, an Internet protocol (IP) protocol layer, etc. The control plane protocol includes one or more of following protocol layers: an F1 application protocol (F1AP), a stream control transport protocol (SCTP), an IP protocol layer, etc. The IAB-node and the IAB-donor may perform interface management, manage IAB-DU, and perform a configuration related to context of the terminal, etc., by a control plane of the F1 interface. The IAB-node and the IAB-donor may transmit data of the user plane, a DL transmission state response, and so on, by a user plane of the F1 interface.

Before describing embodiments of the disclosure, some terms used in embodiments of the disclosure are briefly explained to facilitate understanding by those skilled in the art.
1. Terminal is a device that provides a speech and/or data connectivity to a user. The terminal in the disclosure may be a terminal or a terminal device, or a hardware component in the terminal that may realize functions of the terminal.

In embodiments of this disclosure, the terminal may be called user equipment (UE), a mobile station (MS), an MT, etc. For example, the terminal may include a handheld device with a radio connection function, or a processing device connected to a radio modem. The terminal may communicate with a core network device via a radio access network (RAN) and exchange the speech and/or data with the RAN. For example, the terminal may be a personal communication service (PCS) phone, a cordless phone, a session initiation protocol (SIP) phone, a wireless local loop (WLL) station, a personal digital assistant (PDA), a barcode, a radio frequency identification (RFID), a sensor, a satellite navigation system such as a global positioning system (GPS) or a Beidou positioning system, and an information sensing device such as a laser scanner.

The terminal may also be a wearable device. The wearable device may also be referred to as a wearable smart device, which is a general term of a wearable device which is developed by applying a wearable technology to intelligently design a daily wear, The wearable device may also be such as glasses, gloves, watches, clothing, and shoes. The wearable device is a portable device that is directly worn on a body or integrated into the user's clothes or accessories. The wearable device is not just a hardware device, but also achieves a powerful function by software support, data interaction, and cloud interaction. Broadly speaking, the wearable smart device includes a device with a comprehensive function, a large size, and an ability to perform a complete or partial function without relying on a smartphone, such as a smart watch or a pair of smart glasses, and a device which focus on a certain type of an application function and need to be used in combination with a smartphone or other device, such as various smart bands for monitoring a physical sign, smart helmets, and smart jewelries. The terminal may be a virtual reality (VR) device, an augmented reality (AR) device, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, a terminal in a future evolved public land mobile communication network (PLMN), a vehicle device in a vehicle-to-everything (V2X) network, and customer premises equipment (CPE), etc.

A function of the terminal may be realized by a hardware component in the terminal. The hardware component may be a processor and/or a programmable chip inside the terminal. Alternatively, the chip may be realized by an application-specific integrated circuit (ASIC) or a programmable logic device (PLD). The PLD may be any one or a combination of a complex programmable logic device (CPLD), a field-programmable gate array (FPGA), a generic array logic (GAL), or a system on a chip (SOC).

As described above, various terminals, if located in a vehicle (for example, placed or installed in the vehicle), may be regarded as on-board terminals. The on-board terminal is also called an on-board unit (OBU).

2. IAB-donor, also known as a donor base station, refers to a node by which the core network may be accessed, and is a device in a communication system that accesses the terminal to a wireless network. The IAB-donor is generally connected to the core network by a wired link (such as an optical fiber cable). The IAB-donor is responsible for receiving data from the core network and forwarding the data to a radio backhaul device, or receiving data from the radio backhaul device and forwarding the data to the core network. Generally, the IAB-donor may be connected to the network in a wired manner.

As an example, the IAB-donor may include a radio network controller (RNC), a node B (NB), a base station controller (BSC), a base transceiver station (BTS), a home base station (such as a home evolved Node B or a home Node B (HNB)), a base band unit (BBU), etc. The IAB-donor may also include an evolutional Node B (that is, Node B or eNB or e-NodeB) in an LTE-Advanced (LTE-A), or may include a next generation node B (gNB) in a fifth generation (5G) mobile communication technology new radio (NR) system. As another example, the IAB-donor may include a CU (referred to as donor-CU or gNB-CU in the disclosure) and a DU (referred to as donor-DU or gNB-DU in the disclosure). The gNB-CU and gNB-DU are connected by the F1 interface, and the F1 interface may further include the control plane interface (F1-C) and the user plane interface (F1-U). The CU is connected to the core network by a next-generation (NG) interface. The gNB-CU or donor-CU may also exist in a separated form of a user plane (UP) (referred to as CU-UP in the disclosure) and a control plane (CP) (referred to as CU-CP in the disclosure), that is, the gNB-CU or donor-CU is combined by the CU-CP and the CU-UP. One gNB-CU may include one gNB-CU-CP and at least one gNB-CU-UP, or, one donor-CU may include one donor-CU-CP and at least one donor-CU-UP.

A function of the IAB-donor may be realized by a hardware component in the IAB-donor, such as, a processor and/or a programmable chip in the IAB-donor. For example, the chip may be realized by the ASIC or the PLD. The PLD may be one or a combination of the CPLD, the FPGA, the GAL, and the SoC.

3. Core network device is used to realize functions, such as mobility management, data processing, session management, and policy and charging. Names of devices realizing the functions of the core network device may be different in systems of different access technologies, which is not limited in the disclosure. Taking the 5G network as an example, a logical network element of a 5th generation core (5GC) include: an access and mobility management function (AMF), a session management function (SMF), a user plane function (UPF), a policy control function (PCF), unified data management (UDM), an application function (AF), etc.

4. Access and mobility management function (AMF) primarily performs functions such as mobility management, and access authentication/authorization. In addition, a mobility management network element may also be responsible for transmitting a user policy between the terminal and a policy control function (PCF) network element.

5. UPF, as an interface with a data network, completes functions such as user plane data forwarding, session-based/flow-based charging statistics, and bandwidth limitation.

In addition, for convenience of understanding embodiments of the disclosure, explanations are given below.

First, in embodiments of the disclosure, "be used to indicate" may include a direct indication and an indirect indication. Some information being used to indicate A includes that the information directly indicates A or indirectly indicates A, but does not mean that the information necessarily carries A.

Information indicated by the information is called information to be indicated. In a detailed implementation process, there are multiple ways to indicate the information to be indicated, including but not limited to, directly indicating the information to be indicated, such as the information to be indicated itself or an index of the information to be indicated; or indirectly indicating the information to be indicated by indicating other information, in which there is an association relationship between the other information and the information to be indicated; or merely indicating a part of the information to be indicated, in which other parts of the information to be indicated are known or agreed upon in advance; or indicating a specific piece of information by means of a predetermined order of various pieces of information (such as agreed in a protocol), thus reducing an indication overhead to a certain extent.

The information to be indicated may be sent as a whole, or divided into multiple pieces of sub-information and sent separately. A sending period and/or sending timing of these sub-information may be the same or different. The specific sending method is not limited in the disclosure. The sending period and/or sending timing of the sub-information may be predefined, for example, predefined based according to on the protocol.

Second, in the disclosure, terms such as first, second, and various numbers (such as "IAB-donor 1", "IAB-donor 2") are to distinguish different information only for convenience of description, and do not limit a scope of embodiments of the disclosure.

Third, multiple implementations are listed in embodiments of the disclosure to clearly illustrate the technical solution of embodiments of the disclosure. Of course, those skilled in the art may understand that the multiple implementations in embodiments of the disclosure may be executed individually or executed in combination with the method of other embodiments in the disclosure, or executed individually or in combination with some methods in other related arts, which is not limited in embodiments of the disclosure.

The IAB supports a millimeter wave base station to perform a radio access and backhaul. When a dense network is deployed, a requirement for a new fiber deployment is effectively reduced, which enables the wireless relay possible in a next generation-radio access network (NG-RAN). A relay node is called IAB-node, and supports performing the radio access and backhaul by the NR. A termination node of an NR backhaul in a network side is called IAB-donor, which is a gNB (a base station in the 5G network) added with an IAB function. The backhaul may be performed via single-hop or multi-hop.

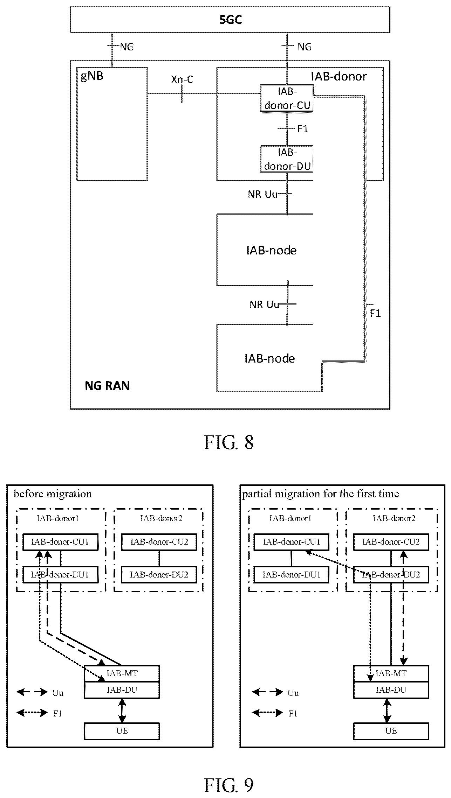

As illustrated in FIGs. 7 and 8, the NG-RAN is wirelessly connected to a gNB (referred to as IAB-donor) that may serve the IAB-node via the IAB-node to support the IAB. The IAB-donor includes one IAB-donor-CU (central unit) and one or more IAB-donor-DUs (distributed units). When a gNB-CU-CP (central unit-control plane) and a gNB-CU-UP (central unit-user plane) are separated, the IAB-donor may include one IAB-donor-CU-CP, multiple IAB-donor-CU-UPs and multiple IAB-donor-DUs. The IAB-node connects to an upstream IAB-node or IAB-donor-DU by a terminal function subset of an NR Uu interface (referred to as IAB-MT function of the IAB-node). The IAB-node provides a radio backhaul to a downstream IAB-node and terminal via a network function of the NR Uu interface (referred to as IAB-DU function of the IAB-node). An F1-C service between the IAB-node and the IAB-donor-CU is backhauled by the IAB-donor-DU and an alternative intermediate hop IAB-node. An F1-U service between the IAB-node and the IAB-donor-CU is backhauled by the IAB-donor-DU and an alternative intermediate hop IAB-node.

In a research project in version R18 IAB, a scenario of a mobile IAB is supported. Research on the mobile IAB focuses on a scenario where an on-board mobile IAB-node provides 5G coverage or capability enhancement for an on-board terminal and/or a peripheral terminal.

A characteristic of the mobile IAB is that the mobile IAB may perform one or more partial migrations.

The IAB-donor-CU connected to the IAB-node may change with movement of the IAB-node. Thus, an IAB-node migration process needs to be performed. The migration process may include a partial migration (only an IAB-MT migration is performed, and IAB-DU remains on a source IAB-donor) and a full migration (IAB-MT and IAB-DU are migrated to a same target IAB-donor). Of course, the migration process may also include other types of migrations than the two migrations mentioned above, such as an IAB-DU migration.

The partial migration refers to that an IAB-MT on the IAB-node only migrates (also known as handover) to a new IAB-donor, while an IAB-DU on the IAB-node still maintains a connection with an original IAB-donor (the connection needs to pass through the IAB-donor-DU of the IAB-MT, that is, a corresponding transmission path needs to be established in the IAB-donor of the IAB-MT), and the context of the terminal on the IAB-DU is also stored on an original IAB-donor. The handover is illustrated in FIG. 9. Before the handover, as illustrated in a left box of FIG. 9, both the IAB-MT and the IAB-DU are connected to an IAB-donor-CU1 before the migration, and the IAB-donor-CU1 is the donor that previously serves the IAB-node. After a partial migration, the IAB-donor-CU1 may be referred to as F1 terminating IAB-donor-CU (or called the IAB-donor-CU of the IAB-DU). At this time, data of the terminal may be transmitted between the terminal and the IAB-donor-CU1 via an F1 connection (only data routing may pass through the IAB-donor-DU2). That is, the context of the terminal is stored on an F1 terminating IAB-donor, while the IAB-MT has switched to an IAB-donor-CU2. Data of the IAB-MT is transmitted via the IAB-donor-CU2, and the IAB-donor-CU2 is called non-F1 terminating IAB-donor (or called IAB-donor-CU of the IAB-MT).

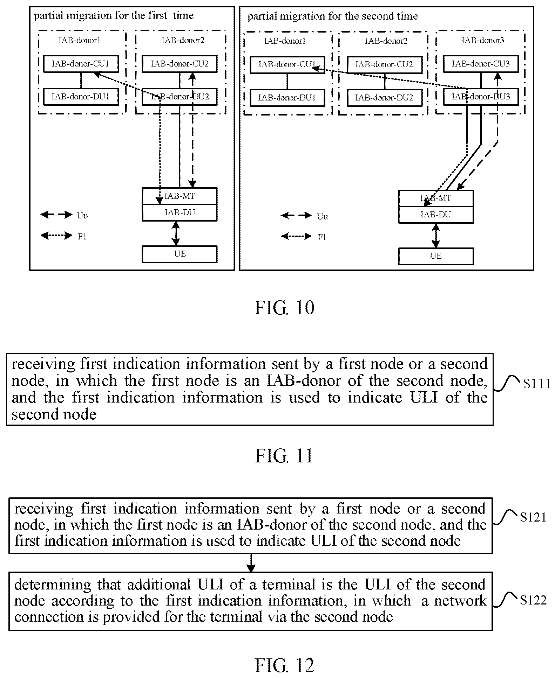

In the case that a mobile IAB-node may experience multiple partial migrations, after more than one partial migration, the F1-terminating IAB-donor (or referred to as IAB-DU's IAB-donor-CU) is the IAB-donor-CU1, the non-F1 terminating IAB-donor is the IAB-donor-CU2 (or referred to as IAB-MT's IAB-donor-CU). As the mobile IAB-node moves, as illustrated in FIG. 10, the IAB-MT may perform handover to a new IAB-donor (also referred to as IAB-MT's target IAB-donor-CU), that is, an IAB-donor-CU3. After the handover is completed, the IAB-donor-CU2 may notify the IAB-donor-CU1 that the IAB-MT has handed over to a new IAB-donor-CU, that is, the IAB-donor-CU3. In the case that the IAB-donor-CU1 decides to execute an IAB transport migration management procedure toward the IAB-donor-CU3 (that is, performing partial migration again), all traffic between the IAB-DU and the IAB-donor-CU1 may migrate from a path in the IAB-donor-CU2 to a path in the IAB-donor-CU3.

In an IAB network architecture, the IAB-node provides radio access and radio backhaul of the access service for the terminal. The IAB-donor provides the radio backhaul function for the IAB-node and provides the interface of the terminal and the core network device. The IAB-node connects to the IAB-donor via the radio backhaul link, thus enabling the terminal served by the IAB-node to connect to the core network device.

In the case that the terminal accesses a network via the IAB-node, in the related art, the core network device connected to the terminal is not supported to obtain user location information of the IAB-node to assist the core network device of the terminal in managing location information of the terminal. Therefore, how the core network device of the terminal determines the ULI of the IAB-node is a problem to be solved.

Please refer to FIG. 11, which is a flowchart of a method for obtaining information according to an embodiment of the disclosure. It needs to be noted that the method for obtaining information of embodiments of the disclosure may be executed by a core network device, or may also be executed by a network function in the core network device, for example, executed by an AMF. As illustrated in FIG. 11, the method may include, but not limited to, the following.

At S111, first indication information sent by a first node or a second node is received, in which the first node is an IAB-donor of the second node, and the first indication information is used to indicate ULI of the second node.

It may be understood that the core network device receives the first indication information sent by the first node, and the first indication information is used to indicate the ULI of the second node. Therefore, the core network device may determine the ULI of the second node.

For example, the ULI of the second node may be information of an access network where the second node resides, including but not limited to at least one of: evolved-UMTS terrestrial radio access (E-UTRAN) ULI, NR ULI, or non-3rd generation partnership project (3GPP) access network information. In the case that the information of the access network is the 3GPP access network information (that is, the E-UTRA ULI or NR ULI), the ULI of the second node may be information of a cell where the second node resides, a tracking area identity (TAI), primary secondary cell group (SCG) cell (PSCell) information, information for identifying a non-public network, and corresponding time information, for example: residing in a first cell at a first time, residing in a second cell at a second time, etc. A resided cell may be a cell that has been resided in, or a cell that will be resided in in the future.

For example, the ULI of the second node may also include a movement velocity and/or a motion trajectory of the second node.

In some embodiments, receiving the first indication information by the core network device from the first node or the second node includes receiving a next generation application protocol (NGAP) message sent by the first node, in which the NGAP message includes the first indication information; or receiving a non-access stratum (NAS) message sent by the second node, in which the NAS message includes the first indication information. In embodiments of the disclosure, receiving, by the core network device, the first indication information sent by the first node may be receiving the NGAP message sent by the first node, in which the NGAP message includes the first indication information.

In some embodiments, the NGAP message is a UE-related message, including but not limited to at least one of: an initial UE message, a UE context setup response message, a UE context modification response message, a UE context release completing message, a radio resource control (RRC) inactivity transition report message, a packet data unit (PDU) session resource release response message, a PDU session resource modification response message, a PDU resource notification message, a PDU session resource modification indication message, etc.

In some embodiments, the NGAP message includes the ULI of the terminal, and the ULI of the terminal includes the first indication information.

In some embodiments, the NGAP message includes the ULI of the terminal and the first indication information.

In embodiments of the disclosure, receiving, by the core network device, the first indication information sent by the second node may include receiving an NAS message sent by the second node, in which the NAS message includes the first indication information.

In embodiments of the disclosure, the second node may be an IAB-node, and the first node may be an IAB-donor of the second node.

In some embodiments, the ULI of the second node is ULI of an MT of the second node, and the first node is the IAB-donor of the MT of the second node, or the first node is an IAB-donor of a DU of the second node.

In embodiments of the disclosure, the second node may include an MT part and a DU part.

The ULI of the second node is the ULI of the MT of the second node.

It may be understood that the second node may perform a partial migration or a full migration, and the MT (IAB-MT) of the second node and the DU (IAB-DU) of the second node may connect to a same IAB-donor, or may also connect to different IAB-donors respectively.

In embodiments of the disclosure, the first node is an IAB-donor of the second node, or the first node may be an IAB-donor of the MT of the second node, or may also be an IAB-donor of the DU of the second node.

It may be understood that in the case that the MT of the second node and the DU of the second node connect to the same IAB-donor, the first node may be the IAB-donor of both the MT of the second node and the DU of the second node, which is not specifically limited in the embodiments of the disclosure.

In some embodiments, the first node (IAB-donor) may include one IAB-donor-CU and one or more IAB-donor-DUs.

In some embodiments, the first node may also be an IAB-donor-CU.

In embodiments of the disclosure, receiving, by the core network device, the first indication information sent by the first node or the second node may include: receiving the first indication information sent by the first node or the second node at any time point, in which the first indication information is used to indicate the ULI of the second node.

For example, the core network device may receive the first indication information sent by the first node or the second node via a message related to a non-terminal, or the core network device may also receive the first indication information sent by the first node or the second node via a message related to a terminal in the case that the terminal connects to the core network device by the second node, etc.

In the implementations or the embodiments, without a contradiction, each step may be independently or arbitrarily combined, or exchanged in order. Alternative methods or examples may be arbitrarily combined, and may be arbitrarily combined with other implementations or embodiments.

By implementing the embodiments of the disclosure, the core network device receives the first indication information sent by the first node or the second node, in which the first node is the IAB-donor of the second node, and the first indication information is used to indicate the ULI of the second node. Therefore, the core network device may determine the ULI of the second node.

Please refer to FIG. 12, which is a flow chart of a method for obtaining information according to another embodiment of the disclosure. It needs to be noted that the method for obtaining the information in embodiments of the disclosure may be executed by a core network device, or may also be executed by a network function in the core network device, for example, executed by an AMF. As illustrated in FIG. 12, the method may include but is not limited to the following.

At S121, first indication information sent by a first node or a second node is received, in which the first node is an IAB-donor of the second node, and the first indication information is used to indicate ULI of the second node.

A relevant description of S121 may be referred to a relevant description in the above embodiments, which is not repeated here.

At S122, it is determined that additional ULI of a terminal is the ULI of the second node according to the first indication information, in which a network connection is provided for the terminal via the second node.

It may be understood that, in the related art, the terminal may connect to the core network device via a base station, and the base station may send the ULI of the terminal to the core network device. The core network device may decide whether to allow the terminal to perform a specific operation at the ULI and provide a service to the terminal according to the ULI. The ULI includes, for example but not limited to, a cell identity (ID), and a tracking area identity (TAI). For a terminal accessed via a mobile IAB, the terminal connects to the core network device via the IAB-node. Considering that the IAB-node is movable, the core network device needs to consider the ULI of the IAB-node when providing a service to the terminal.

Based on this, in the case that the core network device determines that the network connection is provided for the terminal via the second node, it is determined that the additional ULI of the terminal is the ULI of the second node according to the first indication information. Thus, the core network device may consider taking the ULI of the second node as the additional ULI of the terminal to provide a precise service for the terminal, thereby improving a service quality.

In some embodiments, determining, by the core network device, that the network connection is provided for the terminal via the second node may be: determining, by the core network device, that the network connection is provided for the terminal via the second node in the case that the core network device receives the first indication information sent by the first node or the second node when the terminal connects to the core network device via the second node.

It needs to be noted that relevant descriptions of the first node, the second node, the ULI of the second node, and the first indication information may be referred to relevant descriptions in the above embodiments, which is not repeated here.

In the implementations or the embodiments, without a contradiction, each step may be independently or arbitrarily combined, or exchanged in order. Alternative methods or examples may be arbitrarily combined, and may be arbitrarily combined with other implementations or embodiments.

It needs to be noted that in the embodiments of the disclosure, S121 to S122 may be implemented independently, or may be implemented in combination with any other step in the embodiments of the disclosure, for example, in combination with S111 in the embodiments of the disclosure, which is not limited in the embodiments of the disclosure.

By implementing the embodiments of the disclosure, the core network device receives the first indication information sent by the first node or the second node, in which the first node is the IAB-donor of the second node, and the first indication information is used to indicate the ULI of the second node; and determines that the additional ULI of the terminal is the ULI of the second node according to the first indication information, in which the network connection is provided for the terminal via the second node. Thus, the core network device may provide a precise service for the terminal according to the ULI and the additional ULI of the terminal, thereby improving a service quality.

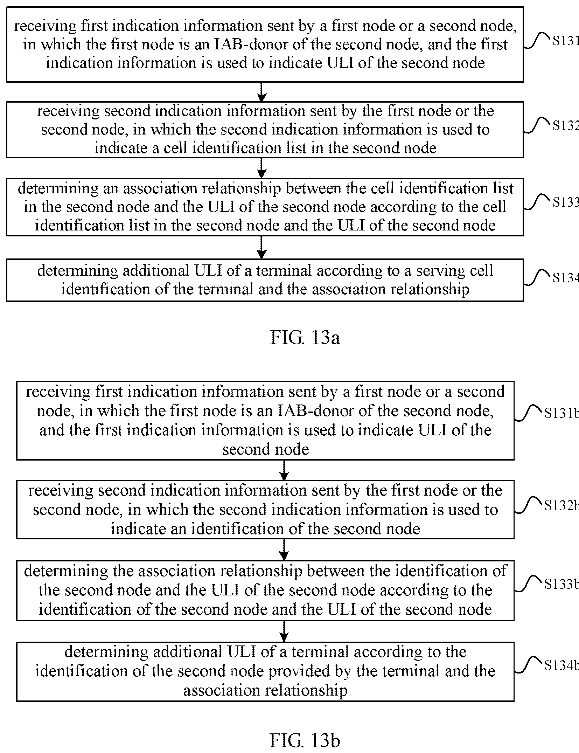

Please refer to FIG. 13a, which is a flow chart of a method for obtaining information according to another embodiment of the disclosure. It needs to be noted that the method for obtaining the information in embodiments of the disclosure may be executed by a core network device, or may also be executed by a network function in the core network device, for example, executed by an AMF. As illustrated in FIG. 13a, the method may include, but is not limited to, the following.

At S131a, first indication information sent by a first node or a second node is received, in which the first node is an IAB-donor of the second node, and the first indication information is used to indicate ULI of the second node.

A relevant description of S131 may be referred to a relevant description in the above embodiments, which is not repeated here.

At S132a, second indication information sent by the first node or the second node is received, in which the second indication information is used to indicate a cell identification list in the second node.

At S133a, an association relationship between a cell identification list in the second node and the ULI of the second node is determined according to the cell identification list in the second node and the ULI of the second node.

At S134a, additional ULI of a terminal is determined according to a serving cell identification (ID) of the terminal and the association relationship.

In embodiments of the disclosure, the core network device receives the second indication information sent by the first node or the second node. The second indication information indicates the cell identification list in the second node. Thus, the core network device may determine the cell identification list in the second node after receiving the second indication information.

In some embodiments, receiving, by the core network device, the second indication information sent by the first node or the second node may include receiving an NGAP message sent by the first node, in which the NGAP message includes the second indication information; or receiving an NAS message sent by the second node, in which the NAS message includes the second indication information.

In embodiments of the disclosure, receiving, by the core network device, the second indication information sent by the first node may include receiving an NGAP message sent by the first node, in which the NGAP message includes the second indication information.

In embodiments of the disclosure, receiving, by the core network device, the second indication information sent by the first node may include receiving an NAS message sent by the second node, in which the NAS message includes the second indication information.

In embodiments of the disclosure, after the core network device receives the second indication information sent by the first node or the second node, the core network device may determine the association relationship between the cell identification list in the second node and the ULI of the second node according to the cell identification list in the second node in the second indication information and the ULI of the second node.

In embodiments of the disclosure, the core network device may determine the additional ULI of the terminal according to the serving cell identification (ID) of the terminal and the association relationship. Thus, the core network device may consider taking the ULI of the second node as the additional ULI of the terminal to provide a precise service for the terminal, thereby improving a service quality.

The core network device determines the association relationship between the cell identification list in the second node and the ULI of the second node. In the case that the serving cell identification of the terminal is in the cell identification list in the second node, it may be determined that the additional ULI of the terminal is the ULI of the second node. Thus, the core network device may consider taking the ULI of the second node as the additional ULI of the terminal to provide a precise service for the terminal, thereby improving a service quality.

It needs to be noted that relevant descriptions of the first node, the second node, the ULI of the second node, and the first indication information may refer to relevant descriptions in the above embodiments, which is not repeated here.

In the implementations or the embodiments, without a contradiction, each step may be independently or arbitrarily combined, or exchanged in order. Alternative methods or examples may be arbitrarily combined, and may be arbitrarily combined with other implementations or embodiments.

It needs to be noted that in the embodiments of the disclosure, S131 to S134 may be implemented alone, or may be implemented in combination with any other step in the embodiments of the disclosure, for example, in combination with S111 in the embodiments of the disclosure, which is not limited in the embodiments of the disclosure.

By implementing the embodiments of the disclosure, the core network device receives the first indication information sent by the first node or the second node, in which the first node is the IAB-donor of the second node, and the first indication information is used to indicate the ULI of the second node; receives the second indication information sent by the first node or the second node, in which the second indication information is used to indicate the cell identification list in the second node; determines the association relationship between the cell identification list in the second node and the ULI of the second node according to the cell identification list in the second node and the ULI of the second node; and determines the additional ULI of the terminal according to the serving cell identification of the terminal and the association relationship. Thus, the core network device may consider taking the ULI of the second node as the additional ULI of the terminal to provide a precise service for the terminal, improving a service quality.

Please refer to FIG. 13b, which is a flow chart of a method for obtaining information according to another embodiment of the disclosure. It needs to be noted that the method for obtaining the information in embodiments of the disclosure may be executed by a core network device, or may also be executed by a network function in the core network device, for example, executed by an AMF. As illustrated in FIG. 13b, the method may include, but is not limited to, the following.

At S131b, first indication information sent by a first node or a second node is received, in which the first node is an IAB-donor of the second node, and the first indication information is used to indicate ULI of the second node.

A relevant description of S131b may be referred to a relevant description in the above embodiments, which is not repeated here.

At S132b, second indication information sent by the first node or the second node is received, in which the second indication information is used to indicate an identification of the second node.

For example, the identification of the second node is used to identify an MT on the second node or on the second node. The identification of the second node may be an AMF UE NGAP ID, an RAN UE NGAP ID, a UE Xn application protocol (XnAP) ID, an F1AP UE ID, or a generic public subscription identifier (GPSI), etc.

At S133b, the association relationship between the identification of the second node and the ULI of the second node is determined according to the identification of the second node and the ULI of the second node.

At S134b, additional ULI of a terminal is determined according to the identification of the second node provided by the terminal and the association relationship.

In embodiments of the disclosure, the core network device receives the second indication information sent by the first node or the second node, and the second indication information indicates the identification of the second node. Thus, the core network device may determine the identification of the second node after receiving the second indication information.

In some embodiments, receiving, by the core network device, the second indication information sent by the first node or the second node may include receiving an NGAP message sent by the first node, in which the NGAP message includes the second indication information; or receiving an NAS message sent by the second node, in which the NAS message includes the second indication information.

In embodiments of the disclosure, receiving, by the core network device, the second indication information sent by the first node may include receiving an NGAP message sent by the first node, in which the NGAP message includes the second indication information.

In embodiments of the disclosure, receiving, by the core network device, the second indication information sent by the first node may include receiving an NAS message sent by the second node, in which the NAS message includes the second indication information.

In embodiments of the disclosure, after receiving the second indication information sent by the first node or the second node, the core network device may determine the association relationship between the identification of the second node and the ULI of the second node according to the identification of the second node and the ULI of the second node.

In embodiments of the disclosure, the core network device may determine the additional ULI of a terminal according to the identification of the second node provided by the terminal and the association relationship. Thus, the core network device may consider taking the ULI of the second node as the additional ULI of the terminal to provide a precise service for the terminal, improving a service quality.

The core network device determines the association relationship between the identification of the second node and the ULI of the second node. In the case that the terminal provides the identification of the second node, it may be determined that the additional ULI of the terminal is the ULI of the second node. Thus, the core network device may consider taking the ULI of the second node as the additional ULI of the terminal to provide a precise service for the terminal, thereby improving a service quality.

It needs to be noted that relevant descriptions of the first node, the second node, the ULI of the second node, and the first indication information may refer to relevant descriptions in the above embodiments, which is not repeated here.

In the implementations or the embodiments, without a contradiction, each step may be independently or arbitrarily combined, or exchanged in order. Alternative methods or examples may be arbitrarily combined, and may be arbitrarily combined with other implementations or embodiments.

It needs to be noted that in the embodiments of the disclosure, S131 to S134 may be implemented independently, or may be implemented in combination with any other step in the embodiments of the disclosure, for example, in combination with S111 in the embodiments of the disclosure, which is not limited in the embodiments of the disclosure.

By implementing the embodiments of the disclosure, the core network device receives the first indication information sent by the first node or the second node, in which the first node is the IAB-donor of the second node, and the first indication information is used to indicate the ULI of the second node; receives the second indication information sent by the first node or the second node, in which the second indication information is used to indicate the identification of the second node; determines the association relationship between the ULI of the second node and the identification of the second node according to the ULI of the second node and the identification of the second node; and determines the additional ULI of the terminal according to the identification of the second node provided by the terminal and the association relationship. Thus, the core network device may consider taking the ULI of the second node as the additional ULI of the terminal to provide a precise service to the terminal, thereby improving a service quality.

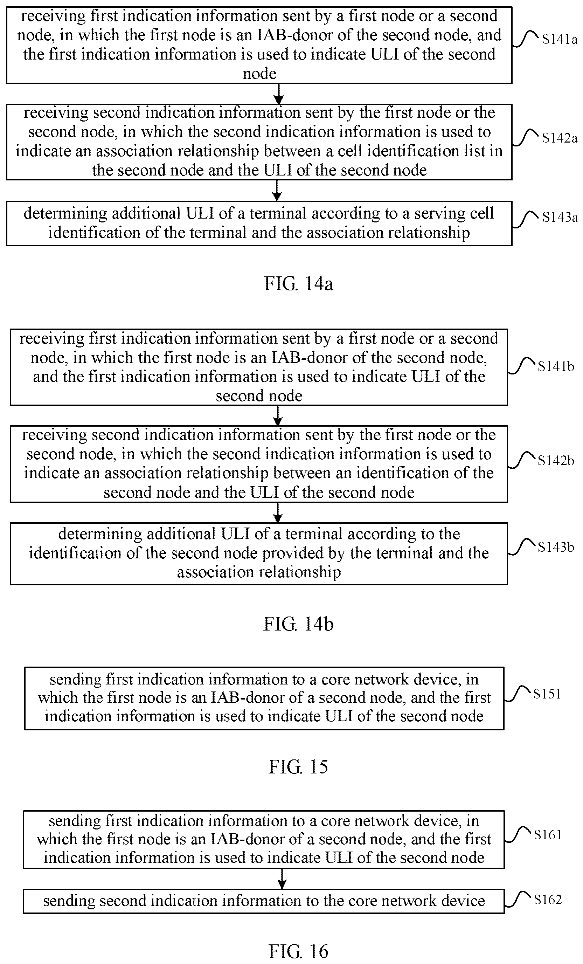

Please refer to FIG. 14a, which is a flow chart of a method for obtaining information according to another embodiment of the disclosure. It needs to be noted that the method for obtaining the information in embodiments of the disclosure may be executed by a core network device, or may also be executed by a network function in the core network device, for example, executed by an AMF. As illustrated in FIG. 14a, the method may include, but is not limited to, the following.

At S141a, first indication information sent by a first node or a second node is received, in which the first node is an IAB-donor of the second node, and the first indication information is used to indicate ULI of the second node.

A relevant description of S141a may be referred to a relevant description in the above embodiments, which is not repeated here.

At S142a, second indication information sent by the first node or the second node is received, in which the second indication information is used to indicate an association relationship between a cell identification list in the second node and the ULI of the second node.

At S143a, additional ULI of a terminal is determined according to a serving cell identification of the terminal and the association relationship.

In embodiments of the disclosure, the core network device receives the second indication information sent by the first node or the second node, and the second indication information indicates the association relationship between the cell identification list in the second node and the ULI of the second node. Thus, the core network device may determine the association relationship between the cell identification list in the second node and the ULI of the second node after receiving the second indication information.

In embodiments of the disclosure, the core network device may determine the additional ULI of the terminal according to the serving cell identification of the terminal and the association relationship. Thus, the core network device may consider taking the ULI of the second node as the additional ULI of the terminal to provide a precise service for the terminal, thereby improving a service quality.

The core network device determines the association relationship between the cell identification list in the second node and the ULI of the second node. In the case that the serving cell identification of the terminal is in the cell identification list in the second node, it may be determined that the additional ULI of the terminal is the ULI of the second node. Thus, the core network device may consider taking the ULI of the second node as the additional ULI of the terminal to provide a precise service for the terminal, thereby improving a service quality.

In some embodiments, receiving, by the core network device, the second indication information sent by the first node or the second node may include receiving an NGAP message sent by the first node, in which the NGAP message includes the second indication information; or receiving an NAS message sent by the second node, in which the NAS message includes the second indication information.

In embodiments of the disclosure, receiving, by the core network device, the second indication information sent by the first node may include receiving an NGAP message sent by the first node, in which the NGAP message includes the second indication information.

In embodiments of the disclosure, receiving, by the core network device, the second indication information sent by the first node may include receiving an NAS message sent by the second node, in which the NAS message includes the second indication information.

It needs to be noted that relevant descriptions of the first node, the second node, the ULI of the second node, and the first indication information may refer to relevant descriptions in the above embodiments, which is not repeated here.

In the implementations or the embodiments, without a contradiction, each step may be independently or arbitrarily combined, or exchanged in order. Alternative methods or examples may be arbitrarily combined, and may be arbitrarily combined with other implementations or embodiments.

It needs to be noted that in the embodiments of the disclosure, S141 to S143 may be implemented independently, or may be implemented in combination with any other step in the embodiments of the disclosure, for example, in combination with S 111 in the embodiments of the disclosure, which is not limited in the embodiments of the disclosure.

By implementing the embodiments of the disclosure, the core network device receives the first indication information sent by the first node or the second node, in which the first node is the IAB-donor of the second node, and the first indication information is used to indicate the ULI of the second node; receives the second indication information sent by the first node or the second node, in which the second indication information is used to indicate the association relationship between the cell identification list in the second node and the ULI of the second node; and determines the additional ULI of the terminal according to the serving cell identification of the terminal and the association relationship. Thus, the core network device may consider taking the ULI of the second node as the additional ULI of the terminal to provide a precise service for the terminal, thereby improving a service quality.

Please refer to FIG. 14b, which is a flow chart of a method for obtaining information according to another embodiment of the disclosure. It needs to be noted that the method for obtaining the information in embodiments of the disclosure may be executed by a core network device, or may also be executed by a network function in the core network device, for example, executed by an AMF. As illustrated in FIG. 14a, the method may include, but is not limited to, the following.

At S141b, first indication information sent by a first node or a second node is received, in which the first node is an IAB-donor of the second node, and the first indication information is used to indicate ULI of the second node.

A relevant description of S141b may be referred to a relevant description in the above embodiments, which is not repeated here.

At S142b, second indication information sent by the first node or the second node is received, in which the second indication information is used to indicate an association relationship between an identification of the second node and the ULI of the second node.

At S143b, additional ULI of a terminal is determined according to the identification of the second node provided by the terminal and the association relationship.

In embodiments of the disclosure, the core network device receives the second indication information sent by the first node or the second node, and the second indication information indicates the association relationship between the identification of the second node and the ULI of the second node. Thus, the core network device may determine the association relationship between the identification of the second node and the ULI of the second node after receiving the second indication information.

In embodiments of the disclosure, the core network device may determine the additional ULI of the terminal according to the identification of the second node provided by the terminal and the association relationship. Thus, the core network device may consider taking the ULI of the second node as the additional ULI of the terminal to provide a precise service for the terminal, thereby improving a service quality.

The core network device determines the association relationship between the identification of the second node and the ULI of the second node. In the case that the terminal provides the identification of the second node, it may be determined that the additional ULI of the terminal is the ULI of the second node. Thus, the core network device may consider taking the ULI of the second node as the additional ULI of the terminal to provide a precise service for the terminal, thereby improving a service quality.

For example, the identification of the second node is used to identify the second node or an MT on the second node. The identification of the second node may be an AMF UE NGAP ID, an RAN UE NGAP ID, a UE XnAP ID, an F1AP UE ID, or a GPSI, etc.

In some embodiments, receiving, by the core network device, the second indication information sent by the first node or the second node may include receiving an NGAP message sent by the first node, where the NGAP message includes the second indication information; or receiving an NAS message sent by the second node, where the NAS message includes the second indication information.

In embodiments of the disclosure, receiving, by the core network device, the second indication information sent by the first node may include receiving the NGAP message sent by the first node, where the NGAP message includes the second indication information.

In embodiments of the disclosure, receiving, by the core network device, the second indication information sent by the second node may include receive the NAS message sent by the second node, where the NAS message includes the second indication information.

It needs to be noted that relevant descriptions of the first node, the second node, the ULI of the second node, and the first indication information may be referred to the relevant descriptions in the above embodiments, which is not repeated here.

In the implementations or embodiments, without contradiction, each step may be independent, arbitrarily combined, or exchanged in order; alternative methods or examples may be arbitrarily combined and may be arbitrarily combined with other implementations or embodiments.

It needs to be noted that, in the embodiments of the disclosure, S141 to S143 may be implemented separately, or may be implemented in combination with any other step in the embodiments of the disclosure, for example, implemented in combination with S111 in the embodiments of the disclosure, which is not limited in the embodiments of the disclosure.

By implementing the embodiments of the disclosure, the core network device receives the first indication information sent by the first node or the second node, in which the first node is the IAB-donor of the second node, and the first indication information is used to indicate the ULI of the second node; receives the second indication information sent by the first node or the second node, in which the second indication information is used to indicate the association relationship between the identification of the second node and the ULI of the second node; and determines the additional ULI of the terminal according to the identification of the second node provided by the terminal and the association relationship. Thus, the core network device may consider taking the ULI of the second node as the additional ULI of the terminal to provide a precise service for the terminal, thereby improving a service quality.

Please refer to FIG. 15, which is a flow chart of a method for obtaining information according to another embodiment of the disclosure. It needs to be noted that the method for obtaining the information in embodiments of the disclosure may be executed by a first node. As illustrated in FIG. 15, the method may include, but is not limited to, the following.

At S151, first indication information is sent to a core network device, in which the first node is an IAB-donor of a second node, and the first indication information is used to indicate ULI of the second node.

In embodiments of the disclosure, the first node may send the first indication information to the core network device, and the first indication information is used to indicate the ULI of the second node. Thus, it is supported that the core network device connected to a terminal obtains the ULI of the second node, in which the terminal accesses a network via the second node.

For example, the ULI of the second node may be information of an access network where the second node resides, including but not limited to: E-UTRAN network ULI, NR ULI, or non-3GPP access network information. In the case that the information of the access network is the 3GPP access network information (that is, the E-UTRA ULI or NR ULI), the ULI of the second node may be information of a cell where the second node resides, a TAI, PSCell information, information for identifying a non-public network, and corresponding time information, for example: residing in a first cell at a first time, residing in a second cell at a second time, etc. A resided cell may be a cell that has been resided in, or a cell that will be resided in in the future.

For example, the ULI of the second node may also include a movement velocity and/or a motion trajectory of the second node.

In some embodiments, sending, by the first node, the first indication information to the core network device includes: sending an NGAP message to the core network device, in which the NGAP message includes the first indication information.

In some embodiments, the NGAP message is a UE-related message, including but not limited to at least one of: an initial UE message, a UE context setup response message, a UE context modification response message, a UE context release completing message, an RRC inactivity transition report message, a PDU session resource release response message, a PDU session resource modification response message, a PDU resource notification message, a PDU session resource modification indication message, etc.

In some embodiments, the NGAP message includes the ULI of the terminal, and the ULI of the terminal includes the first indication information.

In some embodiments, the NGAP message includes the ULI of the terminal and the first indication information.

In embodiments of the disclosure, sending, by the first node, the first indication information to the core network device may include sending an NGAP message to the core network device, in which the NGAP message includes the first indication information.

In some embodiments, the ULI of the second node is ULI of an MT of the second node, and the first node is an IAB-donor of the MT of the second node, or the first node is an IAB-donor of a DU of the second node.

In embodiments of the disclosure, the second node may include an MT part and a DU part.

The ULI of the second node is the ULI of the MT of the second node.

It may be understood that the second node may perform a partial migration or a full migration, and the MT of the second node (IAB-MT) and the DU of the second node (IAB-DU) may connect to a same IAB-donor, or may also connect to different IAB-donors respectively.

In embodiments of the disclosure, the first node is an IAB-donor of the second node, or the first node may be an IAB-donor of the MT of the second node, or may also be an IAB-donor of the DU of the second node.

It may be understood that, in the case that the MT of the second node and the DU of the second node connect to the same IAB-donor, the first node may be the IAB-donor of both the MT of the second node and the DU of the second node, which is not specifically limited in the embodiments of the disclosure.

In some embodiments, the first node (IAB-donor) may include one IAB-donor-CU and one or more IAB-donor-DUs.

In some embodiments, the first node may also be an IAB-donor-CU.

In embodiments of the disclosure, sending, by the first node, the first indication information to the core network device may include sending the first indication information to the core network device at any time, in which the first indication information is used to indicate the ULI of the second node.

For example, the first node may send the first indication information to the core network device in the case that no terminal is connected to the core network device via the second node, or the first node may also send the first indication information to the core network device in the case that the terminal is connected to the core network device via the second node, and so on.

In the implementations or the embodiments, without a contradiction, each step may be independently or arbitrarily combined, or exchanged in order. Alternative methods or examples may be arbitrarily combined, and may be arbitrarily combined with other implementations or embodiments.

By implementing the embodiments of the disclosure, the first node sends the first indication information to the core network device, in which the first node is the IAB-donor of the second node, and the first indication information is used to indicate the ULI of the second node. Thus, it is supported that the core network device connected to a terminal obtains the ULI of the second node, in which the terminal accesses a network via the second node.

Please refer to FIG. 16, which is a flow chart of a method for obtaining information according to another embodiment of the disclosure. It needs to be noted that the method for obtaining the information in embodiments of the disclosure may be executed by a first node. As illustrated in FIG. 16, the method may include, but is not limited to, the following.

At S161, first indication information is sent to a core network device, in which the first node is an IAB-donor of a second node, and the first indication information is used to indicate ULI of the second node.

A relevant description of S161 may be referred to a relevant description in the above embodiments, which is not repeated here.

At S162, second indication information is sent to the core network device.

The second indication information is used to indicate at least one of:
a cell identification list in the second node;
an identification of the second node;
an association relationship between a cell identification list in the second node and the ULI of the second node; or
an association relationship between an identification of the second node and the ULI of the second node.

In embodiments of the disclosure, the first node may send the second indication information to the core network device, and the second indication information is used to indicate the cell identification list in the second node. Thus, it is supported that the first node reports the cell identification list in the second node to the core network device.

In embodiments of the disclosure, the first node may send the second indication information to the core network device, and the second indication information is used to indicate the identification of the second node. Thus, it is supported that the first node reports the identification of the second node to the core network device.

In embodiments of the disclosure, the first node may send the second indication information to the core network device, and the second indication information is used to indicate the association relationship between the cell identification list in the second node and the ULI of the second node. Thus, the first node may support to report the association relationship between the cell identification list in the second node and the ULI of the second node to the core network device.

In embodiments of the disclosure, the first node may send the second indication information to the core network device, and the second indication information is used to indicate the association relationship between the identification of the second node and the ULI of the second node. Thus, the first node may support to report the association relationship between the identification of the second node and the ULI of the second node to the core network device.

For example, the identification of the second node is used to identify the second node or an MT on the second node. The identification of the second node may be an AMF UE NGAP ID, an RAN UE NGAP ID, a UE XnAP ID, an F1AP UE ID, or a GPSI, etc.

In some embodiments, sending, by the first node, the second indication information to the core network device includes sending an NGAP message to the core network device, in which the NGAP message includes the second indication information.

In embodiments of the disclosure, sending, by the first node, the second indication information to the core network device may include sending the NGAP message to the core network device, in which the NGAP message includes the second indication information.

It needs to be noted that relevant descriptions of the first node, the second node, the ULI of the second node, and the first indication information may refer to relevant descriptions in the above embodiments, which is not repeated here.

In the implementations or the embodiments, without a contradiction, each step may be independently or arbitrarily combined, or exchanged in order. Alternative methods or examples may be arbitrarily combined, and may be arbitrarily combined with other implementations or embodiments.

It needs to be noted that in the embodiments of the disclosure, S161 to S162 may be implemented independently, or may be implemented in combination with any other step in the embodiments of the disclosure, for example, in combination with S151 in the embodiments of the disclosure, which is not limited in the embodiments of the disclosure.

By implementing the embodiments of the disclosure, the first node sends the first indication information to the core network device, in which the first node is the IAB-donor of the second node, and the first indication information is used to indicate the ULI of the second node; and sends the second indication information to the core network device. Thus, the first node is supported to report at least one of: the ULI of the second node, the cell identification list in the second node, the identification of the second node, the association relationship between the cell identification list in the second node and the ULI of the second node, or the association relationship between the identification of the second node and the ULI of the second node to the core network device.

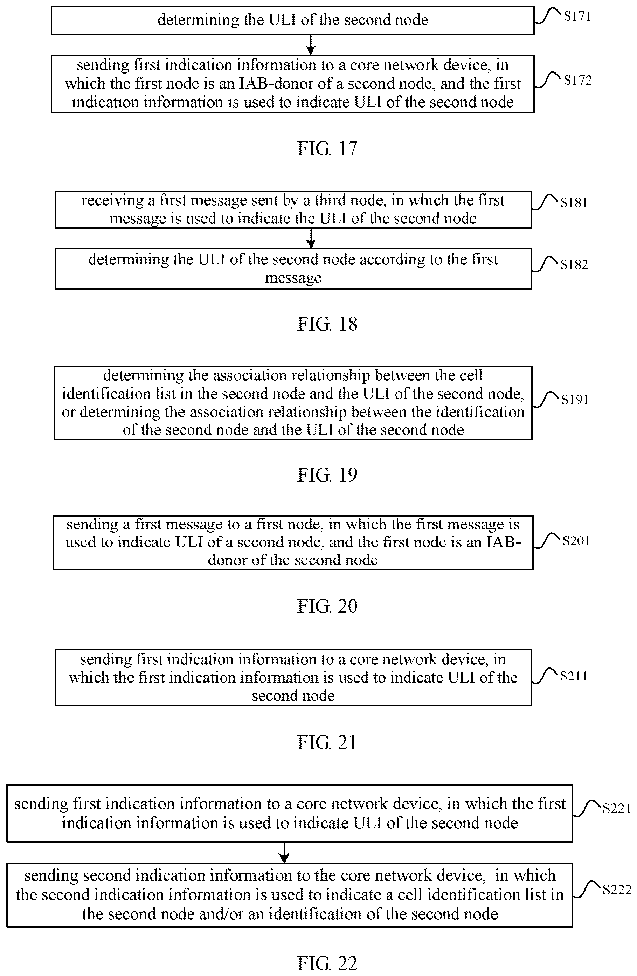

Please refer to FIG. 17, which is a flow chart of a method for obtaining information according to another embodiment of the disclosure. It needs to be noted that the method for obtaining the information in embodiments of the disclosure may be executed by a first node. As illustrated in FIG. 17, the method may include, but is not limited to, the following.

At S171, the ULI of the second node is determined.

In embodiments of the disclosure, the first node may determine the ULI of the second node.

The first node may determine the ULI of the second node by itself, thus determining the ULI of the second node; or may also receive the ULI of the second node sent by the second node, thereby determining the ULI of the second node; or may also receive the ULI of the second node sent by another node, thereby determining the ULI of the second node, which is not specifically limited in embodiments of the disclosure.

At S172, first indication information is sent to a core network device, in which the first node is an IAB-donor of a second node, and the first indication information is used to indicate ULI of the second node.

A relevant description of S 172 may be referred to a relevant description in the above embodiments, which is not repeated here.

It needs to be noted that relevant descriptions of the first node, the second node, the ULI of the second node, and the first indication information may refer to relevant descriptions in the above embodiments, which is not repeated here.

In the implementations or the embodiments, without a contradiction, each step may be independently or arbitrarily combined, or exchanged in order. Alternative methods or examples may be arbitrarily combined, and may be arbitrarily combined with other implementations or embodiments.

It needs to be noted that in the embodiments of the disclosure, S171 to S172 may be implemented independently, or may be implemented in combination with any other step in the embodiments of the disclosure, for example, in combination with S151 and/or S161 to S162 in the embodiments of the disclosure, which is not limited in the embodiments of the disclosure.

By implementing the embodiments of the disclosure, the first node sends the first indication information to the core network device, in which the first node is the IAB-donor of the second node, and the first indication information is used to indicate the ULI of the second node. Thus, it is supported that the core network device connected to the terminal obtains the ULI of the second node, in which the terminal accesses the core network device via the second node.

Please refer to FIG. 18, which is a flow chart of a method for obtaining information according to another embodiment of the disclosure. It needs to be noted that the method for obtaining the information in embodiments of the disclosure may be executed by a first node. As illustrated in FIG. 18, the method may include, but is not limited to, the following.

At S181, a first message sent by a third node is received, in which the first message is used to indicate the ULI of the second node.

At S182, the ULI of the second node is determined according to the first message.

In embodiments of the disclosure, the first node may receive the first message sent by the third node, in which the first message is used to indicate the ULI of the second node. Thus, the first node may determine the ULI of the second node according to the ULI of the second node in the first message.

It needs to be noted that the first message may be used to indicate the ULI of the second node, but the first message is not limited to this purpose, for example, may also be used to indicate other information, which is not specifically limited in embodiments of the disclosure.

In some embodiments, in the case that the first node is an IAB-donor of a DU of the second node, the third node is the DU of the second node.

In embodiments of the disclosure, in the case that the first node is the IAB-donor of the DU of the second node, the third node is the DU of the second node.

The IAB-donor of the DU of the second node receives the first message sent by the DU of the second node, in which the first message is used to indicate the ULI of the second node. The IAB-donor of the DU of the second node may determine the ULI of the second node according to the ULI of the second node in the first message.

In some embodiments, in the case that the first node is the IAB-donor of the DU of the second node, the third node is an IAB-donor of an MT of the second node.

In embodiments of the disclosure, in the case that the first node is the IAB-donor of the DU of the second node, the third node is the IAB-donor of the MT of the second node.

The IAB-donor of the DU of the second node receives the first message sent by the IAB-donor of the MT of the second node, in which the first message includes ULI for indicating the second node. The IAB-donor of the DU of the second node may determine the ULI of the second node according to the ULI of the second node in the first message.

It may be understood that, in the case that a migration of the DU of the second node performed and the DU of the second node migrates from a source IAB-donor to a target IAB-donor, the IAB-donor of the DU of the second node may be the source IAB-donor of the DU of the second node or the target IAB-donor of the DU of the second node.

In some embodiments, in the case that the first node is the target IAB-donor after the migration of the DU of the second node, the third node is the source IAB-donor of the DU of the second node.

In embodiments of the disclosure, in the case that the first node is the target IAB-donor after the migration of the DU of the second node, the third node is the source IAB-donor of the DU of the second node.

The target IAB-donor of the DU of the second node receives the first message sent by the source IAB-donor of the DU of the second node, in which the first message includes the ULI for indicating the second node. The target IAB-donor of the DU of the second node may determine the ULI of the second node according to the ULI of the second node in the first message.

In embodiments of the disclosure, determining, by the first node, the ULI of the second node includes: storing the ULI of the second node, and determining an association relationship between the ULI of the second node and the second node. In the case that the terminal accesses the core network device via the second node, the first node sends the ULI of the second node to the core network device via a message related to the terminal.

In some embodiments, the first message is at least one of:
an F1AP message;
an RRC message; or
an XnAP message.

In embodiments of the disclosure, the first message may be the F1AP message.

In embodiments of the disclosure, the first message may be the RRC message.

In embodiments of the disclosure, the first message may be the XnAP message.

In some embodiments, the first message is a message for indicating the MT of the second node to perform handover.

In embodiments of the disclosure, the first message may be the message for indicating the MT of the second node to perform the handover. For example, the first message may be a message for notifying the IAB-MT to perform the handover.

In some embodiments, the first message is a message related to the terminal or a message unrelated to the terminal.

In embodiments of the disclosure, the first message may be the message related to the terminal or the message unrelated to the terminal.

In some embodiments, in the case that the first message is the message unrelated to the terminal, the first message may also include a cell identification list and/or an identification of the second node.

In embodiments of the disclosure, in the case that the first message is the message unrelated to the terminal, the first message may also include the cell identification list and/or the identification of the second node.

In some embodiments, in the case that the first message is the F1AP message, the first message is used to indicate the ULI of the second node. The ULI of the second node may be included in a message, such as an F1 SETUP REQUEST message and/or a GNB-DU CONFIGURATION UPDATE message.

In some embodiments, in the case that the first message is the F1AP message, the first message is used to indicate the ULI of the second node. The ULI of the second node may be included in a served cell information IE.

In some embodiments, in the case that the first message is the F1AP message and the F1AP message is the message related to the terminal, the F1AP message may be at least one of:
an INITIAL UL RRC MESSAGE TRANSFER message;
a UL RRC MESSAGE TRANSFER message;
a UE CONTEXT SETUP RESPONSE message;
a UE CONTEXT MODIFICATION RESPONSE message; or
a UE INACTIVITY NOTIFICATION message.

In some embodiments, in the case that the first message is the XnAP message, the first message is used to indicate the ULI of the second node. The first message may be an IAB-MT migration completion indication message.

It needs to be noted that relevant descriptions of the first node, the second node, and the ULI of the second node may refer to relevant descriptions in the above embodiments, which is not repeated here.

In the implementations or the embodiments, without a contradiction, each step may be independently or arbitrarily combined, or exchanged in order. Alternative methods or examples may be arbitrarily combined, and may be arbitrarily combined with other implementations or embodiments.

It needs to be noted that in the embodiments of the disclosure, S181 to S182 may be implemented independently, or may be implemented in combination with any other step in the embodiments of the disclosure, for example, in combination with S151 and/or S161 to S162 and/or S171 to S172 in the embodiments of the disclosure, which is not limited in the embodiments of the disclosure.

By implementing the embodiments of the disclosure, the first node receives the first message sent by the third node, in which the first message is used to indicate the ULI of the second node; and determines the ULI of the second node according to the first message. Thus, the first node may determine the ULI of the second node.

Please refer to FIG. 19, which is a flow chart of a method for obtaining information according to another embodiment of the disclosure. It needs to be noted that the method for obtaining the information in embodiments of the disclosure may be executed by a first node. As illustrated in FIG. 19, the method may include, but is not limited to, the following.

At S191, the association relationship between the cell identification list in the second node and the ULI of the second node is determined, or the association relationship between the identification of the second node and the ULI of the second node is determined.

In embodiments of the disclosure, the first node may determine the cell identification list in the second node and the ULI of the second node by itself, and then establish the association relationship between the cell identification list and the ULI of the second node, thus determining the association relationship between the cell identification list in the second node and the ULI of the second node. Alternatively, the first node may also receive the association relationship between the cell identification list and the ULI of the second node sent by another node, thus determining the association relationship between the cell identification list in the second node and the ULI of the second node.

In embodiments of the disclosure, the first node may determine the identification of the second node and the ULI of the second node by itself, and then establish the association relationship between the identification of the second node and the ULI of the second node, thus determining the association relationship between the identification of the second node and the ULI of the second node. Alternatively, the first node may also receive the association relationship between the identification of the second node and the ULI of the second node sent by another node, thus determining the association relationship between the identification of the second node and the ULI of the second node.

It needs to be noted that relevant descriptions of the first node, the second node, and the ULI of the second node may refer to relevant descriptions in the above embodiments, which is not repeated here.

In the implementations or the embodiments, without a contradiction, each step may be independently or arbitrarily combined, or exchanged in order. Alternative methods or examples may be arbitrarily combined, and may be arbitrarily combined with other implementations or embodiments.

It needs to be noted that in the embodiments of the disclosure, S191 may be implemented independently, or may be implemented in combination with any other step in the embodiments of the disclosure, for example, in combination with S151 and/or S161 to S162 and/or S171 to S172 and/or S181 to S182 in the embodiments of the disclosure, which is not limited in the embodiments of the disclosure.

By implementing the embodiments of the disclosure, the first node determines the association relationship between the cell identification list in the second node and the ULI of the second node. Thus, the first node may determine the association relationship between the cell identification list in the second node and the ULI of the second node.

Please refer to FIG. 20, which is a flow chart of a method for obtaining information according to another embodiment of the disclosure. It needs to be noted that the method for obtaining the information in embodiments of the disclosure may be executed by a third node. As illustrated in FIG. 20, the method may include, but is not limited to, the following.

At S201, a first message is sent to a first node, in which the first message is used to indicate ULI of a second node, and the first node is an IAB-donor of the second node.

In embodiments of the disclosure, the third node may send the first message to the first node, in which the first message is used to indicate the ULI of the second node. Thus, it is supported that the third node sends the ULI of the second node to the first node.

It needs to be noted that the first message may be used to indicate the ULI of the second node, but the first message is not limited to this purpose, for example, may also be used to indicate other information, which is not specifically limited in embodiments of the disclosure.

In some embodiments, in the case that the first node is an IAB-donor of a DU of the second node, the third node is the DU of the second node.

In embodiments of the disclosure, in the case that the first node is the IAB-donor of the DU of the second node, the third node is the DU of the second node.

The DU of the second node may send the first message to the IAB-donor of the DU of the second node, and the first message is used to indicate the ULI of the second node.

In some embodiments, in the case that the first node is the IAB-donor of the DU of the second node, the third node is an IAB-donor of an MT of the second node.

In embodiments of the disclosure, in the case that the first node is the IAB-donor of the DU of the second node, the third node is the IAB-donor of the MT of the second node.

The IAB-donor of the MT of the second node may send the first message to the IAB-donor of the DU of the second node, and the first message is used to indicate the ULI of the second node.

It may be understood that, in the case that a migration of the DU of the second node is performed and the DU of the second node migrates from a source IAB-donor to a target IAB-donor, the IAB-donor of the DU of the second node may be the source IAB-donor of the DU of the second node or the target IAB-donor of the DU of the second node.

In some embodiments, in the case that the first node is the target IAB-donor after the migration of the DU of the second node, the third node is the source IAB-donor of the DU of the second node.

In embodiments of the disclosure, in the case that the first node is the target IAB-donor after the migration of the DU of the second node, the third node is the source IAB-donor of the DU of the second node.

The source IAB-donor of the DU of the second node may send the first message to the target IAB-donor of the DU of the second node, and the first message is used to indicate the ULI of the second node.

In some embodiments, the first message is at least one of:
an F1AP message;
an RRC message; or
an XnAP message.

In embodiments of the disclosure, the first message may be the F1AP message.

In embodiments of the disclosure, the first message may be the RRC message.

In embodiments of the disclosure, the first message may be the XnAP message.

In some embodiments, the first message is a message for indicating the MT of the second node to perform handover.

In embodiments of the disclosure, the first message may be the message for indicating the MT of the second node to perform the handover. For example, the first message may be a message for notifying the IAB-MT to perform the handover.

In some embodiments, the first message is a message related to the terminal or a message unrelated to the terminal.

In embodiments of the disclosure, the first message may be the message related to the terminal or the message unrelated to the terminal.

In some embodiments, in the case that the first message is the message unrelated to the terminal, the first message may also include a cell identification list and/or an identification of the second node.

In embodiments of the disclosure, in the case that the first message is the message unrelated to the terminal, the first message may also include the cell identification list and/or the identification of the second node.

In embodiments of the disclosure, the first message may also include the cell identification list.

In some embodiments, in the case that the first message is the F1AP message, the first message is used to indicate the ULI of the second node. The ULI of the second node may be included in a message, such as an F1 SETUP REQUEST message and/or a GNB-DU CONFIGURATION UPDATE message.

In some embodiments, in the case that the first message is the F1AP message, the first message is used to indicate the ULI of the second node. The ULI of the second node may be included in a served cell information IE.

In some embodiments, in the case that the first message is the F1AP message and the F1AP message is the message related to the terminal, the F1AP message may be at least one of:
an INITIAL UL RRC MESSAGE TRANSFER message;
a UL RRC MESSAGE TRANSFER message;
a UE CONTEXT SETUP RESPONSE message;
a UE CONTEXT MODIFICATION RESPONSE message; or
a UE INACTIVITY NOTIFICATION message.

In some embodiments, in the case that the first message is the XnAP message, the first message is used to indicate the ULI of the second node. The first message may be an indication message of an IAB-MT migration completion.

It needs to be noted that relevant descriptions of the first node, the second node, and the ULI of the second node may refer to relevant descriptions in the above embodiments, which will not be repeated here.

In the implementations or the embodiments, without a contradiction, each step may be independently or arbitrarily combined, or exchanged in order. Alternative methods or examples may be arbitrarily combined, and may be arbitrarily combined with other implementations or embodiments.

By implementing the embodiments of the disclosure, the third node sends the first message to the first node, in which the first message is used to indicate the ULI of the second node, and the first node is the IAB-donor of the second node. Thus, it is supported that the third node sends the ULI of the second node to the first node.

Please refer to FIG. 21, which is a flow chart of a method for obtaining information according to another embodiment of the disclosure. It needs to be noted that the method for obtaining the information in embodiments of the disclosure may be executed by a second node. As illustrated in FIG. 21, the method may include, but is not limited to, the following.

At S211, first indication information is sent to a core network device, in which the first indication information is used to indicate ULI of the second node.

In embodiments of the disclosure, the second node may be an IAB-node. The second node may send the first indication information to the core network device, and the first indication information is used to indicate the ULI of the second node. Thus, it is supported that the second node reports the ULI of the second node to the core network device.

For example, the ULI of the second node may be information of an access network where the second node resides, including but not limited to at least one of: E-UTRAN network ULI, NR ULI, or non-3GPP access network information. In the case that the information of the access network is the 3GPP access network information (that is, the E-UTRA ULI or NR ULI), the ULI of the second node may be information of a cell where the second node resides, a TAI, PSCell information, information for identifying a non-public network, and corresponding time information, for example: residing in a first cell at a first time, residing in a second cell at a second time, etc. A resided cell may be a cell that has been resided in, or a cell that will be resided in in the future.

For example, the ULI of the second node may also include a movement velocity and/or a motion trajectory of the second node.

In some embodiments, sending, by the second node, the first indication information to the core network device includes: sending an NGAP message to the core network device, in which the NGAP message includes the first indication information.

In embodiments of the disclosure, sending, by the second node, the first indication information to the core network device may include sending the NGAP message to the core network device, in which the NGAP message includes the first indication information.

In some embodiments, the NGAP message is a UE-related message, including but not limited to at least one of: an initial UE message, a UE context setup response message, a UE context modification response message, a UE context release completing message, an RRC inactivity transition report message, a packet data unit (PDU) session resource release response message, a PDU session resource modification response message, a PDU resource notification message, a PDU session resource modification indication message, etc.

In some embodiments, the NGAP message includes the ULI of the terminal, and the ULI of the terminal includes the first indication information.

In some embodiments, the NGAP message includes the ULI of the terminal and the first indication information.

In some embodiments, the ULI of the second node is ULI of an MT of the second node.

In embodiments of the disclosure, the second node may include an MT part and a DU part.

The ULI of the second node is the ULI of the MT of the second node.

In the implementations or the embodiments, without a contradiction, each step may be independently or arbitrarily combined, or exchanged in order. Alternative methods or examples may be arbitrarily combined, and may be arbitrarily combined with other implementations or embodiments.

By implementing the embodiments of the disclosure, the second node sends the first indication information to the core network device, in which the first indication information is used to indicate the ULI of the second node. Thus, it is supported that the second node reports the ULI of the second node to the core network device.

Please refer to FIG. 22, which is a flow chart of a method for obtaining information according to another embodiment of the disclosure. It needs to be noted that the method for obtaining the information in embodiments of the disclosure may be executed by a second node. As illustrated in FIG. 22, the method may include, but is not limited to, the following.

At S221, first indication information is sent to a core network device, in which the first indication information is used to indicate ULI of the second node.

At S222, second indication information is sent to the core network device, in which the second indication information is used to indicate a cell identification list in the second node and/or an identification of the second node.

In embodiments of the disclosure, the second node may send the second indication information to the core network device, and the second indication information is used to indicate the cell identification list in the second node and/or the identification of the second node. Thus, the second node supports to report the cell identification list to the core network device.

For example, the identification of the second node is used to identify the second node or an MT on the second node. The identification of the second node may be an AMF UE NGAP ID, an RAN UE NGAP ID, a UE XnAP ID, an F1AP UE ID, or a GPSI, etc.

In some embodiments, sending, by the second node, the second indication information to the core network device includes sending an NGAP message to the core network device, in which the NGAP message includes the second indication information.

In embodiments of the disclosure, sending, by the second node, the second indication information to the core network device may include sending the NGAP message to the core network device, in which the NGAP message includes the second indication information.

It needs to be noted that relevant descriptions of the second node, the ULI of the second node, and the first indication information may refer to relevant descriptions in the above embodiments, which is not repeated here.

In the implementations or the embodiments, without a contradiction, each step may be independently or arbitrarily combined, or exchanged in order. Alternative methods or examples may be arbitrarily combined, and may be arbitrarily combined with other implementations or embodiments.

It needs to be noted that in the embodiments of the disclosure, S221 to S222 may be implemented independently, or may be implemented in combination with any other step in the embodiments of the disclosure, for example, in combination with S211 in the embodiments of the disclosure, which is not limited in the embodiments of the disclosure.

By implementing the embodiments of the disclosure, the second node sends the first indication information to the core network device, in which the first indication information is used to indicate the ULI of the second node; and sends the second indication information to the core network device, in which the second indication information is used to indicate the cell identification list in the second node and/or the identification of the second node. Thus, it is supported that the second node reports the ULI of the second node and the cell identification list to the core network device.

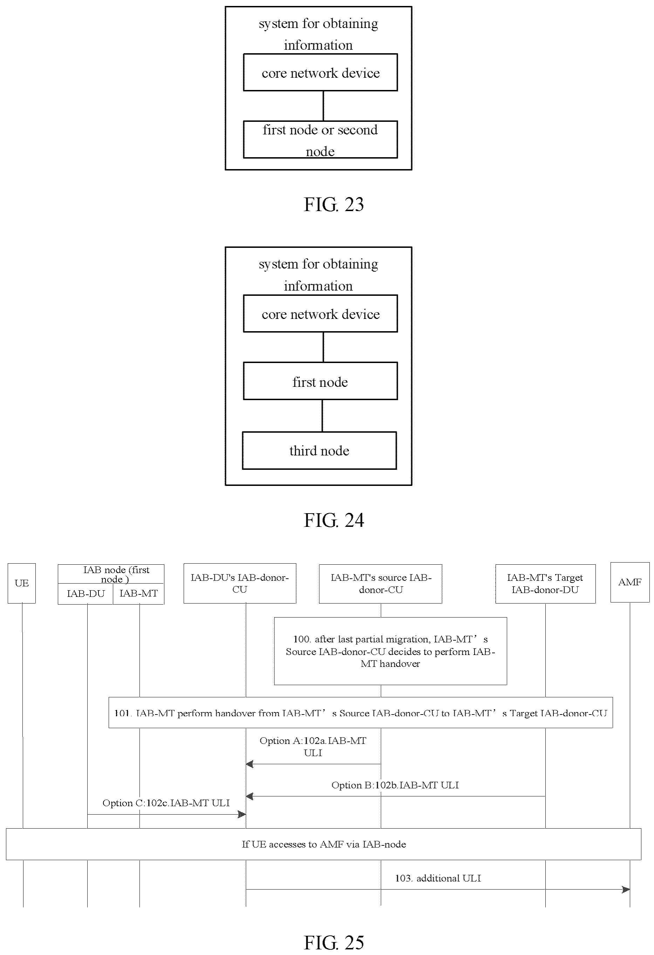

Please refer to FIG. 23, which is block diagram of a system for obtaining information according to an embodiment of the disclosure. As illustrated in FIG. 23, the system may include but is not limited to:

a core network device, configured to receive first indication information sent by a first node or a second node, in which the first node is an IAB-donor of the second node, and the first indication information is used to indicate ULI of the second node; and

the first node or the second node, configured to send the first indication information to the core network device, in which the first node is the IAB-donor of the second node, and the first indication information is used to indicate the ULI of the second node.

As illustrated in FIG. 24, in some embodiments, the system may also include a third node, configured to send a first message to a first node, in which the first message is used to indicate ULI of a second node, and the first node is an IAB-donor of the second node; and

the first node, further configured to determine the ULI of the second node according to the first message.

It needs to be noted that in the above system for obtaining the information, relevant descriptions of methods executed by the core network device, the first node, the second node, and the third node are consistent with relevant descriptions in the above embodiments. For detailed descriptions, please refer to relevant descriptions in some of the above embodiments, which is not repeated here.

In an R18 IAB research, a scenario of mobile IAB is supported. A mobile IAB research focuses on a scenario where a vehicle-mounted mobile IAB-node provides 5G coverage/capability enhancement for a vehicle-mounted terminal and/or a surrounding terminal.

In the related art, a base station serving a UE (terminal) may send ULI to an AMF via a signaling. The AMF may determine whether to allow the terminal to operate at a current location of the terminal according to the ULI.

For a UE accessing via the mobile IAB, to support better UE location management, 3GPP SA2 agrees that the IAB-donor serving the UE needs to provide ULI of an IAB-MT of the IAB-node as additional ULI.

In the case that the IAB-node performs one or more partial migrations (i.e., when a serving IAB-donor-CU of the IAB-MT is different from a serving IAB-donor-CU of IAB-DU), an IAB-donor-CU serving the UE (i.e., IAB-donor-CU of the IAB-DU) may not provide the ULI of the IAB-MT to the core network device as the additional ULI.

In embodiments of the disclosure, by various methods, it may be supported that accurate additional ULI of the UE is provided for the core network device in following scenarios.
- In the case that an IAB-donor-CU to which the IAB-MT belongs is different from an IAB-donor-CU to which the IAB-DU belongs, the IAB-MT performs handover; and
- In the case that an IAB-donor-CU to which the IAB-MT belongs is different from an IAB-donor-CU to which the IAB-DU belongs, the IAB-DU performs handover.

Method 1: The IAB-donor-CU serving the UE may obtain IAB-MT ULI from the IAB-donor-CU serving the IAB-MT, and take the IAB-MT ULI as the additional ULI of the UE and send the IAB-MT ULI to the core network device.

Method 2: The IAB-donor-CU serving the UE may obtain IAB-MT ULI from the IAB-donor-CU serving the IAB-DU, and take the IAB-MT ULI as the additional ULI of the UE and send the IAB-MT ULI to the core network device.

Method 3: The IAB-donor-CU serving the UE may obtain IAB-MT ULI from the IAB-DU, and take the IAB-MT ULI as the additional ULI of the UE and send the IAB-MT ULI to the core network device.

In an exemplary embodiment, the first node performs: receiving first ULI from a third node; taking the ULI as the additional ULI of the UE; and sending the ULI to the core network device.

The first ULI is information of a first sub-node in the second node, and the UE accesses a network via the second node.

In some embodiments, receiving the first ULI by the first node from the third node further includes receiving identification information of the third node corresponding to the first ULI from the third node.

In some embodiments, identification information of the second node may be an identification of the second node and/or an identification list of a serving cell provided by the second node.

In some embodiments, the first node is the IAB-donor-CU, and the third node may be the IAB-donor-CU or the IAB-node.

In some embodiments, in the case that the third node is the IAB-donor-CU and the first node is the IAB-donor-CU, the first ULI and/or the identification information corresponding to the second node are included in an XnAP message.

In some embodiments, in the case the third node is the IAB-node and the first node is the IAB-donor-CU, the first ULI and/or the identification information corresponding to the second node are included in an F1AP message or an RRC message.

Method 4: The IAB-DU or the IAB-donor-CU serving the IAB-DU sends, via an IAB-donor-CU serving the IAB-MT, a cell identification list of the IAB-DU associated with the IAB-MT ULI to the AMF. The AMF determines the additional ULI of the UE according to the cell identification list associated with the IAB-MT ULI and a serving cell identification obtained when the UE accesses.

In an exemplary embodiment, the core network device performs: receiving the identification information of the second node associated with the first ULI from the first node or the second node; and determining the additional ULI of the UE according to the information. The UE accesses the network via the second node.

In some embodiments, the second node is an IAB-node, and the first node is an IAB-donor-CU.

In some embodiments, in the case that the first node is the IAB-donor-CU, the identification information of the second node associated with the first ULI is included in an NGAP message.

In some embodiments, in the case that the second node is the IAB-node, the identification information of the second node associated with the first ULI is included in an NAS message.

It needs to be noted that in the above method, relevant descriptions of methods executed by the core network device, the first node, the second node, and the third node are consistent with relevant descriptions in the above embodiments. For detailed descriptions, please refer to relevant descriptions in some of the above embodiments, which is not repeated here.

To facilitate understanding of embodiments of the disclosure, embodiments of the disclosure provide following exemplary embodiments below.

In an exemplary embodiment, as illustrated in FIG. 25, description is made by taking the first node as an IAB donor of the IAB-DU (IAB-DU's IAB-donor-CU).

At S100, after one partial migration, an IAB-MT's source IAB-donor-CU (i.e., IAB-MT's serving IAB-donor-CU) decides to perform IAB-MT handover.

At S101, the IAB-MT performs handover from the IAB-MT's source IAB-donor-CU to an IAB-MT's target IAB-donor-CU.

At S102a, the IAB-MT's source IAB-donor-CU sends ULI of the IAB-MT to the IAB-DU's IAB-donor-CU.

At S102b, the IAB-MT's target IAB-donor-CU sends the ULI of the IAB-MT to the IAB-DU's IAB-donor-CU.

S102a and S102b may be executed before, after, or during S101.

S102a and S102b may be applied to following embodiments (applied simultaneously or independently in the following embodiments):
- In some embodiments, the ULI of the IAB-MT may be taken as additional ULI of the UE, in which the UE accesses the network (i.e., connects to the AMF) via the IAB-node where the IAB-MT is located.
- In some embodiments, the ULI of the IAB-MT is included in an XnAP message, i.e., the ULI of the IAB-MT is included in an XnAP message sent by the IAB-MT's source IAB-donor-CU to the IAB-DU's IAB-donor-CU; or the IAB-MT is included in an XnAP message sent by the IAB-MT's source IAB-donor-CU to the IAB-DU's IAB-donor-CU;
- Further, in some embodiments, the XnAP message may be a message for notifying the IAB-MT handover;
- Further, in some embodiments, the XnAP message is a UE-unrelated message; and
- Further, in some embodiments, the XnAP message also includes a serving cell identification of the IAB-DU, in which the IAB-DU and the IAB-MT are on a same IAB-node, and the serving cell identification of the IAB-DU is used for the IAB-DU's IAB-donor-CU (i.e., the IAB-donor-CU serving the UE) to send the ULI of the IAB-MT to an AMF connected to the UE according to an identification of a cell accessed by the UE.

At S102c, the IAB-DU sends the ULI of the IAB-MT to the IAB-DU's IAB-donor-CU.

S102c may be executed before, after, or during S101.

S102c may be applied to following embodiments (applied simultaneously or independently in the following embodiments):
- In some embodiments, the ULI of the IAB-MT may be taken as the additional ULI of the UE, in which the UE accesses the network (i.e., connects to the AMF) via the IAB-node where the IAB-MT is located.
- In some embodiments, the ULI of the IAB-MT is included in an F1AP message, i.e., the ULI of the IAB-MT is included in an F1AP message sent by the IAB-DU to the IAB-DU's IAB-donor-CU.
- In some embodiments, the F1AP message may be a message for notifying the IAB-MT handover.
- In some embodiments, the F1AP message is a UE-unrelated message or a UE-related message.
- In some embodiments, in the case that the F1AP message is the UE-unrelated message, the F1AP message also includes a serving cell identification of the IAB-DU, in which the IAB-DU and the IAB-MT are on a same IAB-node, and the serving cell identification of the IAB-DU is used for the IAB-DU's IAB-donor-CU (i.e., the IAB-donor-CU serving the UE) to send the ULI of the IAB-MT to an AMF connected to the UE according to an identification of a cell accessed by the UE.

Further, in some embodiments, the ULI of the IAB-MT is included in a message, such as an F1 SETUP REQUEST message and/or a GNB-DU CONFIGURATION UPDATE message.

Further, in some embodiments, the ULI of the IAB-MT is included in a served cell information IE.
- In some embodiments, in the case that the F1AP message is a UE-related message, the F1AP message may be an INITIAL UL RRC MESSAGE TRANSFER message, a UL RRC MESSAGE TRANSFER message, a UE CONTEXT SETUP RESPONSE message, a UE CONTEXT MODIFICATION RESPONSE message, and/or a UE INACTIVITY NOTIFICATION message, etc.

At S103, the IAB-DU's IAB-donor-CU receives and stores IAB-MT ULI and takes the IAB-MT ULI as the additional ULI of the UE served by the IAB-node.

In some embodiments, in the case that the IAB-DU's IAB-donor-CU receives the IAB-MT ULI via the UE-unrelated message, the IAB-DU's IAB-donor-CU may determine the additional ULI of the UE according to a cell identification (e.g., one or more cell identifications) received together with the IAB-MT ULI and a cell identification actually accessed by the UE.

In some embodiments, in the case that the IAB-DU's IAB-donor-CU receives the IAB-MT ULI via the UE-related message, the IAB-DU's IAB-donor-CU takes the IAB-MT ULI as the additional ULI of the UE.

Based on this, the IAB-DU's IAB-donor-CU sends the additional ULI of the UE to the AMF. The AMF may provide a more accurate service for the UE via the additional ULI.

In embodiments illustrated in FIG. 25, alternatively, in some implementations, 102a, 102b, and 102c are alternative, and one of 102a, 102b, and 102c may be executed.

In embodiment illustrated in FIG. 25, alternatively, in some implementations, 102a, 102b, and 102c may be executed before 101.

Detailed content of each step in FIG. 25 is described in detail in the embodiments of FIGs. 11 to 22 above. For details, please refer to following descriptions corresponding to FIGs. 11 to 22 above, which is not repeated here.

To facilitate understanding of the embodiments of the disclosure, embodiments of the disclosure provide following exemplary embodiments below.

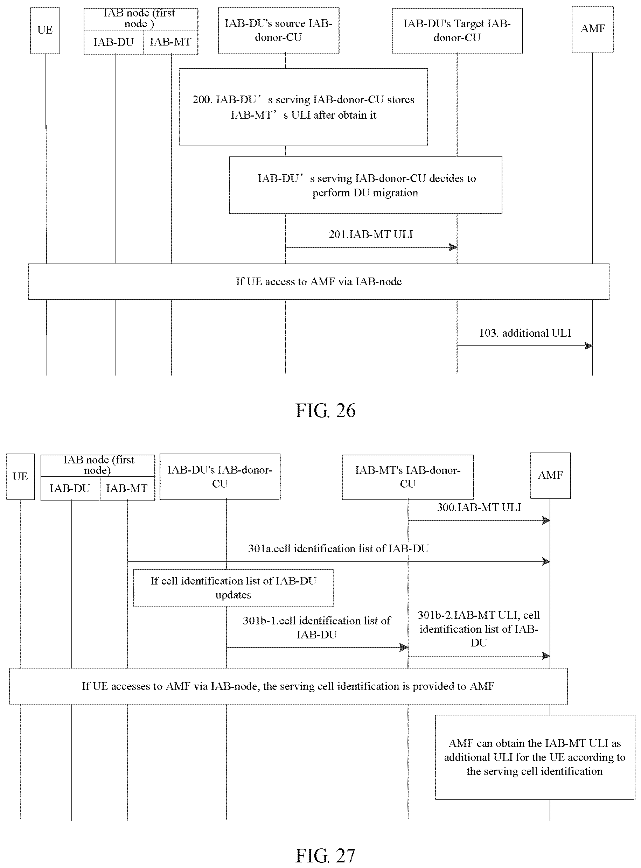

In an exemplary embodiment, as illustrated in FIG. 26, description is made by taking the first node as the target IAB-donor of the IAB-DU (IAB-DU's target IAB-donor-CU).

At S200, in the case that an IAB-MT ULI is obtained, the IAB-DU's serving IAB-donor-CU stores the IAB-MT ULI.

At S201, in the case that the IAB-DU's source IAB-donor-CU (i.e., IAB-DU's serving IAB-donor-CU) decides to perform a DU migration, the IAB-DU's source IAB-donor-CU sends the IAB-MT ULI to the IAB-DU's target IAB-donor-CU.
- In some embodiments, the IAB-MT ULI is included in an XnAP message, that is, the ULI of the IAB-MT is included in an XnAP message sent by the IAB-DU's source IAB-donor-CU to the IAB-DU's target IAB-donor-CU. The XnAP message may be an IAB-DU migration request message, an IAB transport migration request message, or another XnAP message.
- Further, in some embodiments, the XnAP message also includes a serving cell identification of the IAB-DU. The serving cell identification of the IAB-DU is used for the IAB-DU's target IAB-donor-CU to send the ULI of the IAB-MT to an AMF connected to the UE according to an identification of a cell accessed by the UE.

At S201, the IAB-DU's target IAB-donor-CU receives and stores the IAB-MT ULI and takes the IAB-MT ULI as additional ULI of the UE served by the IAB-node.

In the case that the UE accesses the core network device (e.g., AMF) via the IAB-node, the IAB-DU's target IAB-donor-CU sends the additional ULI of the UE to the AMF. The AMF may provide a more accurate service for the UE via the additional ULI.

Detailed content of each step in FIG. 26 is described in detail in the embodiments of FIGs. 11 to 22 above. For details, please refer to following descriptions corresponding to FIGs. 11 to 22 above, which is not repeated here.

To facilitate understanding of embodiments of the disclosure, embodiments of the disclosure provide following exemplary embodiments below.

In an exemplary embodiment, as illustrated in FIG. 27, 301a takes the first node as the IAB-MT for description, and 301b to 301c take the first node as the IAB-donor of the IAB-MT (IAB-MT's IAB-donor CU) for description.

At S300, the IAB-MT's target IAB-donor-CU sends the IAB-MT ULI to the AMF.

At S301a, the IAB-MT sends a cell identification list of the IAB-DU to the AMF.

The IAB-MT and the IAB-DU are on a same IAB-node.

At S301b-1, the IAB-DU's IAB-donor-CU sends the cell identification list of the IAB-DU to the IAB-MT's IAB-donor-CU.

At S301b-2, the IAB-MT's IAB-donor-CU sends the cell identification list of the IAB-DU to the AMF.

The AMF receives the information and associates the IAB-MT ULI with the cell identification list. In the case that the UE accesses the core network device (e.g., AMF) via a cell in the IAB-node, the AMF may determine the additional ULI of the UE according to a provided serving cell identification (ID) and the cell identification list associated with the IAB-MT ULI. The AMF may provide a more accurate service for the UE via the additional ULI.

In embodiments illustrated in FIG. 27, alternatively, in some implementations, 301a and 301b-1 to 301b-2 are alternative, and one of 301a and 301b-1 to 301b-2 may be executed.

Detailed content of each step in FIG. 27 is described in detail in the embodiments of FIGs. 11 to 22 above. For details, please refer to following descriptions corresponding to FIGs. 11 to 22 above, which is not repeated here.

In the embodiments of the disclosure, the method according to the embodiments of the disclosure is introduced from perspectives of the core network device, the first node, the third node and the second node respectively.

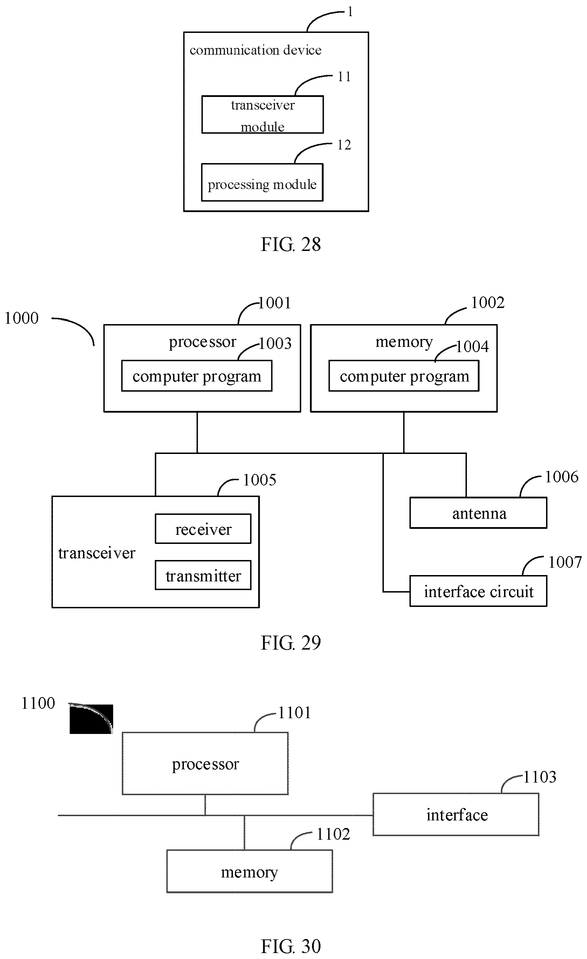

Please refer to FIG. 28, which is a block diagram of a communication device 1 according to an embodiment of the disclosure. The communication device 1 illustrated in FIG. 28 may include a transceiver module 11 and a processing module. The transceiver module may include a sending module and/or a receiving module. The sending module is configured to realize a sending function, the receiving module is configured to realize a receiving function, and the transceiver module may realize the sending function and/or the receiving function.

The communication device 1 may be a core network device, a first node, a third node, or a second node, or may be an apparatus in a core network device, a first node, a third node, or a second node, or may be an apparatus that may be used in combination with a core network device, a first node, a third node, or a second node.

The communication device 1 is applied to a core network device. The communication device includes: a transceiver module 11.

The transceiver module 11 is configured to receive first indication information sent by a first node or a second node, in which the first node is an IAB-donor of the second node, and the first indication information is used to indicate ULI of the second node.

In some embodiments, the device further includes a processing module 12.

The processing module 12 is configured to determine that additional ULI of a terminal is the ULI of the second node according to the first indication information, in which a network connection is provided for the terminal via the second node.

In some embodiments, the transceiver module 11 is further configured to receive second indication information sent by the first node or the second node, in which the second indication information is used to indicate at least one of:
a cell identification list in the second node;
an identification of the second node;
an association relationship between a cell identification list in the second node and the ULI of the second node; or
an association relationship between an identification of the second node and the ULI of the second node.

In some embodiments, the processing module 12 is further configured to determine the association relationship between the cell identification list in the second node and the ULI of the second node according to the cell identification list in the second node and the ULI of the second node, in which the second indication information is used to indicate the cell identification list in the second node; or determine the association relationship between the identification of the second node and the ULI of the second node according to the identification of the second node and the ULI of the second node, in which the second indication information is used to indicate the identification of the second node.

In some embodiments, the processing module 12 is further configured to determine additional ULI of a terminal according to a serving cell identification of the terminal and the association relationship; or determine additional ULI of a terminal according to the identification of the second node provided by the terminal and the association relationship.

In some embodiments, the ULI of the second node is ULI of an MT of the second node, and the first node is the IAB-donor of the MT of the second node, or the first node is an IAB-donor of a DU of the second node.

In some embodiments, the transceiver module 11 is further configured to receive an NGAP message sent by the first node, in which the NGAP message includes the first indication information; or receive an NAS message sent by the second node, in which the NAS message includes the first indication information.

In some embodiments, the transceiver module 11 is further configured to receive an NGAP message sent by the first node, in which the NGAP message includes the second indication information; or receive an NAS message sent by the second node, in which the NAS message includes the second indication information.

The communication device 1 is applied to a first node. The communication device includes: a transceiver module 11.

The transceiver module 11 is configured to send first indication information to a core network device, in which the first node is an IAB-donor of a second node, and the first indication information is used to indicate ULI of the second node.

In some embodiments, the transceiver module 11 is further configured to send second indication information to the core network device, in which the second indication information is used to indicate at least one of:
a cell identification list in the second node;
an identification of the second node;
an association relationship between a cell identification list in the second node and the ULI of the second node; or
an association relationship between an identification of the second node and the ULI of the second node.

In some embodiments, the transceiver module 11 is further configured to send an NGAP message to the core network device, in which the NGAP message includes the first indication information.

In some embodiments, the transceiver module 11 is further configured to send an NGAP message to the core network device, in which the NGAP message includes the second indication information.

In some embodiments, the ULI of the second node is ULI of an MT of the second node, the first node is the IAB-donor of the MT of the second node, or the first node is an IAB-donor of a DU of the second node.

In some embodiments, the device includes a processing module 12. The processing module is configured to determine the ULI of the second node.

In some embodiments, the transceiver module 11 is further configured to receive a first message sent by a third node, in which the first message is used to indicate the ULI of the second node.

In some embodiments, the processing module 12 is further configured to determine the ULI of the second node according to the first message.

In some embodiments, in the case that the first node is the IAB-donor of the DU of the second node, the third node is the DU of the second node or the IAB-donor of the MT of the second node.

In some embodiments, in the case that the first node is a target IAB-donor after a migration of the DU of the second node, the third node is a source IAB-donor of the DU of the second node.

In some embodiments, the first message is at least one of:
an F1AP message;
an RRC message; or
an XnAP message.

In some embodiments, the first message is further used to indicate the MT of the second node to perform handover.

In some embodiments, the first message is a terminal-related message or a terminal-unrelated message.

In some embodiments, in the case that the first message is the terminal-unrelated message, the first message may further include a cell identification list in the second node and/or an identification of the second node.

In some embodiments, the processing module 12 is configured to determine the association relationship between the cell identification list in the second node and the ULI of the second node, or determine the association relationship between the identification of the second node and the ULI of the second node.

The communication device 1 is applied to a second node. The communication device includes: a transceiver module 11.

The transceiver module 11 is configured to send a first message to a first node, in which the first message is used to indicate ULI of a second node, and the first node is an IAB-donor of the second node.

In some embodiments, in the case that the first node is an IAB-donor of a DU of the second node, the third node is the DU of the second node or an IAB-donor of an MT of the second node.

In some embodiments, in the case that the first node is a target IAB-donor after a migration of the DU of the second node, the third node is a source IAB-donor of the DU of the second node.

In some embodiments, the first message is at least one of:
an F1AP message;
an RRC message; or
an XnAP message.

In some embodiments, the first message is further used to indicate the MT of the second node to perform handover.

In some embodiments, the first message is a terminal-related message or a terminal-unrelated message.

In some embodiments, the first message is the terminal-unrelated message, and the first message further includes a cell identification list in the second node or an identification of the second node.

In some embodiments, the first message further includes a cell identification list in the second node or an identification of the second node.

The communication device 1 is applied to a second node. The communication device includes: a transceiver module 11.

The transceiver module 11 is configured to send first indication information to a core network device, in which the first indication information is used to indicate ULI of the second node.

In some embodiments, the transceiver module 11 is further configured to send second indication information to the core network device, in which the second indication information is used to indicate a cell identification list in the second node and/or an identification of the second node.

In some embodiments, the transceiver module 11 is further configured to send an NGAP message to the core network device, in which the NGAP message includes the first indication information.

In some embodiments, the transceiver module 11 is further configured to send the NGAP message to the core network device, in which the NGAP message includes the second indication information.

In some embodiments, the ULI of the second node is ULI of an MT of the second node.

For the communication device 1 in the above embodiments, detailed ways in which each module performs an operation are described in detail in the embodiments related to the method, which is not repeated here.

The communication device 1 in the above embodiments of the disclosure achieves a same or similar beneficial effect as the method for obtaining the information in some embodiments above, which is no repeated here.

Please refer to FIG. 29, which is a block diagram of a communication device 1000 according to another embodiment of the disclosure. The communication device 1000 may be a core network device, a first node, a third node or a second node; or may be a chip, a chip system, a processor, etc. that supports a core network device, a first node, a third node or a second node to realize the above method. The communication device 1000 is configured to realize the method in the above method embodiments. For details, please refer to the description in the above method embodiments.

The communication device 1000 may include one or more processors 1001. The processor 1001 may be a general-purpose processor or a special-purpose processor, for example, a baseband processor or a central processing unit. The baseband processor is configured to process communication protocols and communication data, and the central processor is configured to control communication devices (such as base stations, baseband chips, terminals, terminal chips, DU or CU, etc.) to execute a computer program and process computer program data.

Alternatively, the communication device 1000 may also include one or more memories 1002 on which a computer program 1004 is stored. When the computer program 1004 in the memory 1002 is executed, the communication device 1000 executes the method in the above method embodiments. Alternatively, the memory 1002 may also store data. The communication device 1000 and the memory 1002 may be set separately or integrated together.

Alternatively, the communication device 1000 may also include a transceiver 1005 and an antenna 1006. The transceiver 1005 may be called a transceiver unit, a transceiver machine, or a transceiver circuit, etc., to achieve a receiving and sending function. The transceiver 1005 may include a receiver and a transmitter. The receiver may be called a receiver or a receiving circuit, etc., to achieve the receiving function; and the transmitter may be called a transmitter or a transmitting circuit, etc., to achieve the sending function.

Alternatively, the communication device 1000 may also include one or more interface circuits 1007. The interface circuit 1007 is configured to receive code instructions and transmit the code instructions to the processor 1001. When the code instructions are run on the processor 1001, the communication device 1000 is enabled to execute the method in the above method embodiments.

When the communication device 1000 is a core network device, the transceiver 1005 is configured to execute S111 in FIG. 11; S121 in FIG. 12; S131a and S132a in FIG. 13a; S131b and S132b in FIG. 13b; S141a and S142a in FIG. 14a; and S141b and S142b in FIG. 14b, and the processor 1001 is configured to execute S122 in FIG. 12; S133a and S134a in FIG. 13a; S133b and S134b in FIG. 13b; S143a in FIG. 14a; and S143b in FIG. 14b.

When the communication device 1000 is a first node, the transceiver 1005 is configured to execute S151 in FIG. 15; S161 and S162 in FIG. 16; S172 in FIG. 17; and S181 in FIG. 18, and the processor 1001 is configured to execute S171 in FIG. 17; S182 in FIG. 18; and S191 in FIG. 19.

When the communication device 1000 is a third node, the transceiver 1005 is configured to execute S201 in FIG. 20.

When the communication device 1000 is a second node, the transceiver 1005 is configured to execute S211 in FIG. 21; and S221 and S222 in FIG. 22.

In an implementation, the processor 1001 may include a transceiver configured to achieve the receiving and sending function. For example, the transceiver may be a transceiver circuit, an interface, or an interface circuit. The transceiver circuit, the interface, or the interface circuit for achieving the receiving and sending function may be set separately or integrated together. The transceiver circuit, the interface or the interface circuit may be configured to read and write code/data, or the transceiver circuit, the interface or the interface circuit may be configured to transmit or deliver signals.

In an implementation, the processor 1001 may store a computer program 1003. When the computer program 1003 is run on the processor 1001, the communication device 1000 is enabled to execute the method in the above method embodiments. The computer program 1003 may be solidified in the processor 1001, in which case the processor 1001 may be realized in hardware.

In an implementation, the communication device 1000 may include a circuit. The circuit may achieve the sending or receiving or communicating function in the above method embodiments. The processor and transceiver in the disclosure may be realized in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a core network device, a first node, a third node or a second node, but the scope of the communication device in the disclosure is not limited to this, and a structure of the communication device may not be restricted by FIG. 29. The communication device may be an independent device or part of a larger device. For example, the communication device may be:
(1) an independent IC, or a chip, or a chip system or a subsystem;
(2) a collection including one or more IC, alternatively, the IC collection also including storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For a case where the communication device may be a chip or a chip system, please refer to FIG. 30, which is a block diagram of a chip according to an embodiment of the disclosure.

A chip 1100 includes a processor 1101 and an interface 1103. There may be one or more processors 1101, and there may be one or more interfaces 1103.

For a case where the chip is configured to realize functions of the core network device in the embodiments of the disclosure:
the interface 1103 is configured to receive code instructions and transmit the code instructions to a processor; and
the processor 1101 is configured to run the code instructions to execute the method for obtaining the information in some of the above embodiments.

For a case where the chip is configured to realize functions of the first node in the embodiments of the disclosure:
the interface 1103 is configured to receive code instructions and transmit the code instructions to a processor; and
the processor 1101 is configured to run the code instructions to execute the method for obtaining the information in some of the above embodiments.

For a case where the chip is configured to realize functions of the second node in the embodiments of the disclosure:
the interface 1103 is configured to receive code instructions and transmit the code instructions to the processor; and
the processor 1101 is configured to run the code instructions to execute the method for obtaining the information in some of the above embodiments.

For a case where the chip is configured to realize the function of the third node in the embodiments of the disclosure:
the interface 1103 is configured to receive code instructions and transmit the code instructions to the processor; and
the processor 1101 is configured to run the code instructions to execute the method for obtaining the information in some of the above embodiments.

Alternatively, the chip 1100 further includes a memory 1102 for storing necessary computer programs and data.

Those skilled in the art may also understand that the various illustrative logical blocks and steps listed in the embodiments of the disclosure may be realized by electronic hardware, computer software, or their combination. Whether such a function is realized in hardware or software depends on specific applications and design requirements of the overall system. Those skilled in the art may, for each specific application, use a variety of methods to achieve the above function, but such implementation should not be regarded as going beyond the scope of the protection of the embodiments of the disclosure.

The embodiments of the disclosure also provide a system for obtaining information. The system includes a communication device as the core network device, a communication device as the first node, a communication device as the third node, and/or a communication device as the second node in the above embodiment of FIG. 28; or, the system includes a communication device as the core network device, a communication device as the first node, a communication device as the third node, and/or a communication device as the second node in the above embodiment of FIG. 29.

The disclosure also provides a computer-readable storage medium for storing instructions. When the instructions are executed by a computer, functions of any one of the above method embodiments are executed.

The disclosure also provides a computer program product. When the computer program product is executed by a computer, functions of any one of the above method embodiments are realized.

In the above embodiments, the functions may be wholly or partially realized by software, hardware, firmware, or any combination of them. When realized by the software, the functions may be realized in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center in a wire (such as a coaxial cable, a fiber optic, a digital subscriber line (DSL)) or wireless (such as infrared, wireless, microwave) way. The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, and are not intended to limit the scope of the embodiments of the disclosure, but also to indicate an order of precedence.

The term "at least one" in the disclosure may also be described as one or more, and the more may be two, three, four, or more, which is not limited in the disclosure. In the embodiments of the disclosure, for a technical feature, the technical feature in the technical features is distinguished by terms "first", "second", "third", "A", "B", "C" and "D", etc., and the technical features described by the terms "first", "second", "third", "A", "B", "C" and "D", etc. are not in a sequential order or in an order of size.

Depending on the context, words "if" and "in case that" used here may be interpreted as "when", "while", or "in response to determining...".

Corresponding relationships indicated by tables in the disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the disclosure, corresponding relationships indicated by some rows may not be configured. For another example, appropriate transformations and adjustments, such as splitting and merging, may be made based on the above tables. Names of parameters illustrated in headers of the tables may be other names understandable by the communication device, and values or representations of the parameters may be other values or representations understandable by the communication device. When the above tables are realized, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, units and algorithm steps of the examples described in combination with the embodiments of the disclosure may be realized by an electronic hardware or a combination of an electronic hardware and a computer software. Whether the functions are executed by the hardware or the software depends on a specific application and a design constraint of the technical solutions. Those skilled in the art may adopt different methods for each specific application to realize the described functions, but such implementation should not be considered as going beyond the scope of the disclosure.

Those skilled in the art may clearly understand that, for convenience and conciseness of description, a specific working process of a system, an apparatus and a unit described above may refer to a corresponding process in the above method embodiments, which is not repeated here.

The above are only implementations of the disclosure. However, the protection scope of the disclosure is not limited here. Any skilled in the art familiar with the technical field may easily think of changes or substitutions within the technical scope disclosed in the disclosure, which should be covered by the protection scope of the disclosure. Therefore, the protection scope of the disclosure should be subject to the protection scope of claims.

## Claims

1. A method for obtaining information, executed by a core network device, comprising:
receiving first indication information sent by a first node or a second node, wherein the first node is an integrated access and backhaul (IAB) donor of the second node, and the first indication information is used to indicate user location information (ULI) of the second node.

2. The method of claim 1, further comprising:
determining that additional ULI of a terminal is the ULI of the second node according to the first indication information, wherein a network connection is provided for the terminal via the second node.

3. The method of claim 1, further comprising:
receiving second indication information sent by the first node or the second node, wherein the second indication information is used to indicate at least one of:
a cell identification list in the second node;
an identification of the second node;
an association relationship between a cell identification list in the second node and the ULI of the second node; or
an association relationship between an identification of the second node and the ULI of the second node.

4. The method of claim 3, further comprising:
determining the association relationship between the cell identification list in the second node and the ULI of the second node according to the cell identification list in the second node and the ULI of the second node, wherein the second indication information is used to indicate the cell identification list in the second node; or
determining the association relationship between the identification of the second node and the ULI of the second node according to the identification of the second node and the ULI of the second node, wherein the second indication information is used to indicate the identification of the second node.

5. The method of claim 3 or 4, further comprising:
determining additional ULI of a terminal according to a serving cell identification of the terminal and the association relationship; or
determining additional ULI of a terminal according to the identification of the second node provided by the terminal and the association relationship.

6. The method of any one of claims 1 to 6, wherein the ULI of the second node is ULI of a mobile termination (MT) of the second node, and
the first node is the IAB-donor of the MT of the second node, or the first node is an IAB-donor of a distributed unit (DU) of the second node.

7. The method of any one of claims 1 to 6, wherein receiving the first indication information sent by the first node or the second node comprises:
receiving a next generation application protocol (NGAP) message sent by the first node, wherein the NGAP message comprises the first indication information; or
receiving a non-access stratum (NAS) message sent by the second node, wherein the NAS message comprises the first indication information.

8. The method of any one of claims 3 to 6, wherein receiving the second indication information sent by the first node or the second node comprises:
receiving an NGAP message sent by the first node, wherein the NGAP message comprises the second indication information; or
receiving an NAS message sent by the second node, wherein the NAS message comprises the second indication information.

9. A method for obtaining information, executed by a first node, comprising:
sending first indication information to a core network device, wherein the first node is an integrated access and backhaul (IAB) donor of a second node, and the first indication information is used to indicate user location information (ULI) of the second node.

10. The method of claim 9, further comprising:
sending second indication information to the core network device, wherein the second indication information is used to indicate at least one of:
a cell identification list in the second node;
an identification of the second node;
an association relationship between a cell identification list in the second node and the ULI of the second node; or
an association relationship between an identification of the second node and the ULI of the second node.

11. The method of claim 9 or 10, wherein sending the first indication information to the core network device comprises:
sending a next generation application protocol (NGAP) message to the core network device, wherein the NGAP message comprises the first indication information.

12. The method of claim 10, wherein sending the second indication information to the core network device comprises:
sending an NGAP message to the core network device, wherein the NGAP message comprises the second indication information.

13. The method of any one of claims 9 to 12, wherein the ULI of the second node is ULI of a mobile termination (MT) of the second node, and
the first node is the IAB-donor of the MT of the second node, or the first node is an IAB-donor of a distributed unit (DU) of the second node.

14. The method of any one of claims 9 to 13, further comprising:
determining the ULI of the second node.

15. The method of claim 14, wherein determining the ULI of the second node comprises:
receiving a first message sent by a third node, wherein the first message is used to indicate the ULI of the second node; and
determining the ULI of the second node according to the first message.

16. The method of claim 15, wherein the first node is the IAB-donor of the DU of the second node, and the third node is the DU of the second node or the IAB-donor of the MT of the second node.

17. The method of claim 15, wherein the first node is a target IAB-donor after a migration of the DU of the second node, and the third node is a source IAB-donor of the DU of the second node.

18. The method of any one of claims 15 to 17, wherein the first message is at least one of:
an F1 application protocol (F1AP) message;
a radio resource control (RRC) message; or
an Xn application protocol (XnAP) message.

19. The method of any one of claims 15 to 18, wherein the first message is further used to indicate the MT of the second node to perform handover.

20. The method of any one of claims 15 to 19, wherein the first message is a terminal-unrelated message, and the first message comprises the cell identification list.

21. The method of any one of claims 10 to 20, further comprising:
determining the association relationship between the cell identification list in the second node and the ULI of the second node, or determining the association relationship between the identification of the second node and the ULI of the second node.

22. A method for obtaining information, executed by a third node, comprising:
sending a first message to a first node, wherein the first message is used to indicate user location information (ULI) of a second node, and the first node is an integrated access and backhaul (IAB) donor of the second node.

23. The method of claim 22, wherein in the case that the first node is an IAB-donor of a distributed unit (DU) of the second node, the third node is the DU of the second node or an IAB-donor of a mobile termination (MT) of the second node.

24. The method of claim 22, wherein in the case that the first node is a target IAB-donor after a migration of the DU of the second node, the third node is a source IAB-donor of the DU of the second node.

25. The method of any one of claims 22 to 24, wherein the first message is at least one of:
an F1 application protocol (F1AP) message;
a radio resource control (RRC) message; or
an Xn application protocol (XnAP) message.

26. The method of any one of claims 22 to 25, wherein the first message is further used to indicate the MT of the second node to perform handover.

27. The method of any one of claims 22 to 26, wherein the first message is a terminal-unrelated message, and the first message further comprises a cell identification list in the second node or an identification of the second node.

28. The method of any one of claims 22 to 26, wherein the first message further comprises a cell identification list in the second node or an identification of the second node.

29. A method for obtaining information, executed by a second node, comprising:
sending first indication information to a core network device, wherein the first indication information is used to indicate user location information (ULI) of the second node.

30. The method of claim 29, further comprising:
sending second indication information to the core network device, wherein the second indication information is used to indicate at least one of:
a cell identification list in the second node; or
an identification of the second node.

31. The method of claim 29 or 30, wherein sending the first indication information to the core network device comprises:
sending a next generation application protocol (NGAP) message to the core network device, wherein the NGAP message comprises the first indication information.

32. The method of claim 31, wherein sending the second indication information to the core network device comprises:
sending the NGAP message to the core network device, wherein the NGAP message comprises the second indication information.

33. The method of any one of claims 29 to 32, wherein the ULI of the second node is ULI of a mobile termination (MT) of the second node.

34. A communication device, comprising:
a transceiver module, configured to receive first indication information sent by a first node or a second node, wherein the first node is an integrated access and backhaul (IAB) donor of the second node, and the first indication information is used to indicate user location information (ULI) of the second node.

35. A communication device, comprising:
a transceiver module, configured to send first indication information to a core network device, wherein the communication device is an integrated access and backhaul (IAB) donor of a second node, and the first indication information is used to indicate user location information (ULI) of the second node.

36. A communication device, comprising:
a transceiver module, configured to send a first message to a first node, wherein the first message is used to indicate user location information (ULI) of a second node, and the first node is an integrated access and backhaul (IAB) donor of the second node.

37. A communication device, comprising:
a transceiver module, configured to send first indication information to a core network device, wherein the first indication information is used to indicate user location information (ULI) of the communication device.

38. A communication device, comprising a processor and a memory for storing a computer program, wherein the computer program stored in the memory is executed by the processor, the communication device is caused to execute the method of any one of claims 1 to 8, or the method of any one of claims 9 to 21, or the method of any one of claims 22 to 28, or the method of any one of claims 29 to 33.

39. A computer-readable storage medium for storing instructions, wherein when the instructions are executed, the method of any one of claims 1 to 8, or the method of any one of claims 9 to 21, or the method of any one of claims 22 to 28, or the method of any one of claims 29 to 33 is realized.

40. A system for obtaining information, comprising:
a core network device, configured to execute the method of any one of claims 1 to 8; and
a first node, configured to execute the method of any one of claims 9 to 21.

41. The system of claim 40, further comprising:
a second node, configured to execute the method of any one of claims 29 to 33.

42. The system of claim 40 or 41, further comprising:
a third node, configured to execute the method of any one of claims 22 to 28.
